# EUROPEAN PATENT SPECIFICATION

(11) **EP 4 343 502 B1**
(45) Date of publication and mention of the grant of the patent: **10.12.2025**
(21) Application number: 23784060.8
(22) Date of filing: 04.01.2023
(51) Int. Cl.: G06F 3/0354

(54) **ACCESSORY DETECTION SYSTEM**
ZUBEHÖRDETEKTIONSSYSTEM
SYSTÈME DE DÉTECTION D'ACCESSOIRE

(30) Priority: 06.04.2022 CN 202210358836
(43) Date of publication of application: 27.03.2024
(73) Proprietor: Honor Device Co., Ltd., Shenzhen, Guangdong 518040 (CN)
(72) Inventor: ZHANG, Wujia, Shenzhen, Guangdong 518040 (CN); ZHANG, Youjun, Shenzhen, Guangdong 518040 (CN)
(74) Representative: Beder, Jens
(86) International application number: PCT/CN2023/070387
(87) International publication number: WO 2023/193494

(56) References cited:
- EP-A1- 4 279 859
- WO-A1-2016/122212
- CN-A- 109 542 254
- CN-A- 114 217 699
- CN-A- 114 217 699
- CN-A- 115 543 106
- US-A1- 2022 077 724

## Description

This application claims priority to the Chinese Patent Application No. 202210358836.3, filed with the China National Intellectual Property Administration on April 06, 2022 and entitled "ACCESSORY DETECTION SYSTEM'.

### TECHNICAL FIELD

This application relates to the technical field of attachment detection, and in particular, to an accessory detection system.

### BACKGROUND

With the pursuit of the market of performance and enhanced user experience of electronic devices, more and more electronic devices are equipped with to-be-attached accessories. The to-be-attached accessory (such as a stylus) may be fixed to the electronic device (such as an electronic device) through attachment, or may exist independently from the electronic device.

The electronic device usually has a function of detecting whether the to-be-attached accessory is fixed in position through attachment, so as to perform some functions based on this, such as a function of charging the stylus by the electronic device. However, the detection principle of the current attachment detection solution leads to the problem of high costs of consumables.

CN 114 217 699 A discloses a method for detecting a nib direction of a stylus pen when attached to a tablet device, wherein the tablet device includes two spaced hall sensors and the stylus includes one hall sensor and the stylus and tablet device are attached via a magnetic attraction module.

### SUMMARY

Embodiments of this application provide an accessory detection system according to the enclosed independent claims, so as to solve the problem of high costs of consumables of the system due to the detection principle of the current attachment detection solution. The invention is defined in the appended claims. Advantageous features of the present invention are defined in the corresponding subclaims.

To achieve the foregoing objective, the following technical solutions are used in the embodiments of this application.

An accessory detection system includes an electronic device and a to-be-attached accessory. The electronic device includes a first attachment component and a magnetic field detection device. The magnetic field detection device is configured to obtain a magnetic field intensity intensity of a position of the magnetic field detection device. The to-be-attached accessory includes a second attachment component, a first magnet, and a second magnet. The second attachment component is configured to be attached to the first attachment component, so that the to-be-attached accessory is fixed to the electronic device through attachment in a first orientation or a second orientation. The first magnet is configured to trigger the magnetic field detection device to output first indication information when the to-be-attached accessory is fixed to the electronic device through attachment in the first orientation, and the first indication information is used to indicate that the to-be-attached accessory is fixed in position through attachment. The second magnet is configured to trigger the magnetic field detection device to output the first indication information when the to-be-attached accessory is fixed through attachment in the second orientation.

In the accessory detection system, the magnetic field intensity information generated by the first magnet (or the second magnet) at the position of the magnetic field detection device is obtained through the magnetic field detection device, and the intensity of the magnetic field intensity information is distinguished, so as to accurately determine whether the to-be-attached accessory is fixed in position through attachment. In addition, the first magnet can trigger the magnetic field detection device to output the first indication information when the to-be-attached accessory is fixed to the electronic device through attachment in a positive direction, and the second magnet can trigger the magnetic field detection device to output the first indication information when the to-be-attached accessory is fixed to the electronic device through attachment in a negative direction, thereby realizing the detection during the fixation in position through attachment in two orientations.

It can be seen that by arranging a magnetic field detection device in the electronic device, and arranging two magnets, that is, the first magnet and the second magnet, in the to-be-attached accessory, the detection of the to-be-attached accessory when fixed in position through attachment in the positive direction or in the negative direction is realized. Compared with the detection solution that two magnetic field detection devices are arranged in the electronic device and a magnet is arranged in the to-be-attached accessory to realize that the to-be-attached accessory is fixed in position through attachment in the positive direction or in the negative direction, the cost of a magnet added in the to-be-attached accessory is negligible, but the expense of a magnetic field detection device in the electronic device is saved, thereby reducing the consumable cost.

In addition, for the to-be-attached accessory fixed to a side of the electronic device through attachment, when a Hall device is selected as the magnetic field detection device, in view of the detection principle of the Hall device, in order to cause a magnetic line of the magnet in the to-be-attached accessory to vertically pass through a Hall plate of the Hall device, it is necessary to erect and fix the Hall device so that the Hall plate is perpendicular to the motherboard. In this case, the Hall device is to be connected to the motherboard through devices such as an elastic piece. Therefore, after the overheads of a Hall device are saved, the consumption of these accessories and the consumable cost are naturally saved. In addition, since a magnetic field detection device is omitted in the electronic device, an area and internal space of a PCB in the electronic device are saved.

Optionally, the magnetic field detection device is configured to output the first indication information when the magnetic field intensity information is greater than a preset threshold. The magnetic field detection device is further configured to output second indication information when the magnetic field intensity information is less than the preset threshold. The second indication information is used to indicate that the to-be-attached accessory is not fixed in position through attachment. The preset threshold is determined based on the magnetic field intensity information generated at the magnetic field detection device when the to-be-attached accessory is exactly fixed to the electronic device through attachment.

In some embodiments, the magnetic field detection device and the first attachment component are arranged side by side in the first direction, and the first direction is perpendicular to a thickness direction of the electronic device. The first magnet, the second attachment component, and the second magnet are arranged side by side in the second direction. The first orientation is opposite to the second orientation. In the embodiment, the magnetic field detection device and the first attachment component are arranged side by side in the first direction, and the first magnet, the second attachment component, and the second magnet are arranged side by side in the second direction, so that a difference of 180 degrees between the attachment in the positive direction and the attachment in the negative direction can be realized.

In some embodiments of this application, the first magnet is opposite to the magnetic field detection device when the to-be-attached accessory is fixed through attachment in the first orientation. The second magnet is opposite to the magnetic field detection device when the to-be-attached accessory is fixed through attachment in the second orientation.

It is to be understood that the first magnet and the second magnet may trigger the magnetic field detection device to output the first indication information at a relatively large spacing. It is to be understood that a larger spacing between the first magnet and the magnetic field detector leads to a weaker magnetic field intensity generated at the magnetic field detection device. A smaller spacing leads to a stronger magnetic field intensity generated at the magnetic field detection device. If the first magnet and the second magnet trigger the magnetic field detection device to output the first indication information at a relatively large spacing, a higher requirement is to be imposed on the sensitivity of the magnetic field detection device. In this embodiment, when the to-be-attached accessory is fixed to the electronic device through attachment in the positive direction, the first magnet is opposite to the magnetic field detection device, which are spaced apart by a small spacing, so that a larger magnetic field can be generated at the magnetic field detection device, and the condition of triggering the magnetic field detection device to output the first indication information can be more easily achieved, which reduces the requirement for the sensitivity of the magnetic field detection device.

Optionally, the first magnet and the second magnet are symmetrically arranged with respect to a center line of the second attachment component. When the to-be-attached accessory is fixed through attachment in the first orientation, the first magnet exactly faces the magnetic field detection device if the first attachment component exactly faces the second attachment component. When the to-be-attached accessory is fixed through attachment in the second orientation, the second magnet exactly faces the magnetic field detection device if the first attachment component exactly faces the second attachment component.

It is to be understood that since the first magnet and the second magnet are arranged symmetrically with respect to the center line of the second attachment component, a spacing between the first magnet and the center line of the second attachment component is the same as a spacing between the second magnet and the center line of the second attachment component. Based on this, when the to-be-attached accessory is fixed through attachment in the negative direction, the second magnet can also exactly face the magnetic field detection device if the first attachment component exactly faces the second attachment component. This embodiment provides a solution that the first magnet and the second magnet can still be opposite to the magnetic field detection device after the attachment direction is reversed.

Further, a maximum spacing by which the first magnet is offset from the magnetic field detection device is a first spacing when the to-be-attached accessory is fixed through attachment in the first orientation. When the first magnet is offset from the magnetic field detection device by the first spacing, the magnetic field intensity generated by the first magnet at the magnetic field detection device is a first magnetic field intensity. The magnetic field detection device is configured to output the first indication information when the magnetic field intensity is greater than or equal to the preset threshold. The magnetic field detection device is configured to output second indication information when the magnetic field intensity is less than the preset threshold. The second indication information is used to indicate that the to-be-attached accessory is not fixed in position through attachment. The preset threshold is determined based on the first magnetic field intensity.

In some embodiments of this application, the second attachment component includes a third attachment member and a fourth attachment member that are symmetrically arranged and spaced apart in the second direction. The first attachment component includes a first attachment member and a second attachment member that are symmetrically arranged and spaced apart in the first direction. When the first attachment member is attached to the third attachment member, and the second attachment member is attached to the fourth attachment member, the to-be-attached accessory is fixed to the electronic device in the first orientation. When the first attachment member is attached to the fourth attachment member, and the second attachment member is attached to the third attachment member, the to-be-attached accessory is fixed to the electronic device in the second orientation.

The embodiment provides a feasible solution of fixing the to-be-attached accessory to the electronic device in the forward and negative directions through the attachment between the first attachment component and the second attachment component.

In some embodiments of this application, the electronic device further includes a first wireless charging module, and the first wireless charging module includes a first charging structure. The to-be-attached accessory further includes a second wireless charging module, and the second wireless charging module includes a second charging structure. The first charging structure and the second charging structure remain opposite when the to-be-attached accessory is fixed through attachment in the first orientation or the second orientation. The first wireless charging module is configured to control the first charging structure to output a current when the to-be-attached accessory is fixed in position through attachment. The second wireless charging module is configured to receive the current through the second charging structure to charge the to-be-attached accessory.

Specifically, the first charging structure is symmetrically arranged with respect to a center line of the first attachment component. The second charging structure is located between the first magnet and the second magnet, and the second charging structure is symmetrically arranged with respect to the center line of the second attachment component. When the to-be-attached accessory is fixed to a tablet computer through attachment, a spacing by which the first attachment component is offset from the second attachment component in the second direction is less than half of the first charging structure in the first direction and less than half of the second charging structure in the second direction. The embodiment provides a solution that can cause the first charging structure and the second charging structure to remain opposite when the to-be-attached accessory is fixed through attachment in the first orientation or the second orientation.

Optionally, when the electronic device receives the first indication information, the to-be-attached accessory is fixed in position through attachment.

Optionally, the first charging chip is further configured to control the first charging structure to output a communication connection request signal after the electronic device receives the first indication information and before it is determined that the to-be-attached accessory is fixed in position through attachment. The communication connection request signal is used for enabling the to-be-attached accessory to output pairing information. The first charging chip is further configured to receive the pairing information through the first charging structure. When the first charging structure receives the pairing information and the pairing information is verified successfully, the to-be-attached accessory is fixed in position through attachment. When the first charging structure does not receive the pairing information, the to-be-attached accessory is not fixed in position through attachment. The second charging chip is further configured to receive the communication connection request signal through the second charging structure, and control the second charging structure to output the pairing information after receiving the communication connection request signal. In this embodiment, before it is determined that the to-be-attached accessory is fixed in position, in order to avoid a false positive, after the first indication information is received, it is further determined whether the to-be-attached accessory is fixed in position before determining whether the first charging structure and the second charging structure can interact. The solution provides two-level determination, and the false positive rate is lower.

Further, the first wireless charging module is further configured to switch to an operating state when the electronic device receives the first indication information. The first wireless charging module is further configured to switch to a low power consumption state when the electronic device does not receive the first indication information.

It may be learned from the foregoing content that the first wireless charging module starts to operate only after receiving the first indication information. Based on this, the embodiment switches to the operating state only when the first indication information is received. When the first indication information is not received, switching to a low power consumption state can effectively reduce power consumption.

In some designs, a first spacing exists between the first attachment component and the magnetic field detection device in the first direction. The first spacing is used to prevent the first attachment component from affecting the magnetic field at the position of the magnetic field detection device.

It is to be noted that, the first attachment component does not affect the magnetic field at the position of the magnetic field detection device, which means that the existence or nonexistence of the first attachment component does not cause a change in the magnetic field at the magnetic field detection device. In other words, the first attachment component does not generate a magnetic field at the magnetic field detection device. It is to be understood that if the first attachment component generates a magnetic field at the magnetic field detection device, the magnetic field required to trigger the magnetic field detection device to output the first indication information is reduced, which is equivalent to lowering the threshold for the magnetic field detection device to be triggered to output the first indication information. In this case, when the to-be-attached accessory is not fixed in position, the magnetic field that triggers the new threshold can be generated, resulting in a false positive. Based on this, by setting the first spacing, the first attachment component does not affect the magnetic field at the position of the magnetic field detection device, which is beneficial to reducing the false positive rate.

In some designs, a second spacing exists between the first magnet and the second attachment component in the second direction, and the second spacing is used to prevent the second attachment component from affecting the magnetic field at the position of the magnetic field detection device when the to-be-attached accessory is fixed through attachment in the first orientation. A third spacing exists between the second magnet and the second attachment component in the second direction, and the third spacing is used to prevent the second attachment component from affecting the magnetic field at the position of the magnetic field detection device when the to-be-attached accessory is fixed through attachment in the second orientation. The effect of setting the second spacing and the third spacing herein is similar to the effect of setting the first spacing, and the details are not described herein again.

For example, the to-be-attached accessory is a stylus, and the stylus is attached to a side or a back side of the electronic device in the first orientation or the second orientation. The second direction is a length direction of the stylus.

Optionally, the magnetic field detection device is a Hall switch.

### BRIEF DESCRIPTION OF DRAWINGS

FIG. 1 is a schematic diagram of a principle of a possible attachment detection solution;
FIG. 2 is a schematic structural diagram of an accessory detection system according to some embodiments of this application;
FIG. 3 is a schematic structural diagram of an accessory detection system according to some other embodiments of this application;
FIG. 4 is a schematic diagram of a fixable area of a tablet computer shown in FIG. 2;
FIG. 5A and FIG. 5B are attachment state diagrams of a stylus of the accessory detection system shown in FIG. 2;
FIG. 6 is an architecture diagram I of a detection principle of the accessory detection system shown in FIG. 2;
FIG. 7 is an architecture diagram II of a detection principle of the accessory detection system shown in FIG. 2;
FIG. 8 is a flowchart of detection of a magnetic field detection device according to some embodiments of this application;
FIG. 9 is a schematic structural diagram of an accessory detection system according to some other embodiments of this application;
FIG. 10A and FIG. 10B are schematic structural diagrams of an accessory detection system according to some other embodiments of this application;
FIG. 11 is a diagram of a possible accidental trigger scenario of the accessory detection system shown in FIG. 2;
FIG. 12 is a schematic diagram of an architecture of an accessory detection system according to an embodiment of this application;
FIG. 13 is a schematic structural diagram of an accessory detection system according to some other embodiments of this application;
FIG. 14 is a diagram of a possible placing scenario of the accessory detection system shown in FIG. 13;
FIG. 15 is a schematic diagram of an architecture of a communication connection established between a tablet computer and a stylus in the accessory detection system shown in FIG. 13;
FIG. 16 is a flowchart of establishing a communication connection by a processor in FIG. 15;
FIG. 17 is a schematic structural diagram of an accessory detection system according to some other embodiments of this application; and
FIG. 18 is a schematic structural diagram of an accessory detection system according to some other embodiments of this application.

### DESCRIPTION OF EMBODIMENTS

Technical solutions in embodiments of this application are described below with reference to the accompanying drawings in the embodiments of this application. In the descriptions of this application, "/" indicates an "or" relationship between associated objects unless otherwise specified. For example, A/B may represent A or B. In this application, "and/or" indicates only an association relationship for describing associated objects and indicates that three relationships may exist. For example, A and/or B may represent that only A exists, both A and B exist, and only B exists, where A and B may be singular or plural. In addition, in the description of this application, unless otherwise stated, "a plurality of" means two or more. Moreover, for ease of describing the technical solutions in the embodiments of this application clearly, in the embodiments of this application, terms such as "first" and "second" are used to distinguish between same or similar items with basically same functions and roles. A person skilled in the art may understand that the terms "first", "second", and the like do not limit a quantity and an execution order, and the terms "first", "second", and the like are not limited to be necessarily different. In addition, in the embodiments of this application, the terms such as "exemplarily" or "for example" are used to represent giving an example, an illustration, or a description. Any embodiment or design scheme described by using "exemplarily" or "for example" in the embodiments of this application is not to be explained as being more preferred or having more advantages than another embodiment or design scheme. Exactly, use of the term such as "exemplarily" or "for example" is intended to present a related concept in a specific manner, to facilitate understanding.

The embodiments of this application are described in detail below with reference to the accompanying drawings.

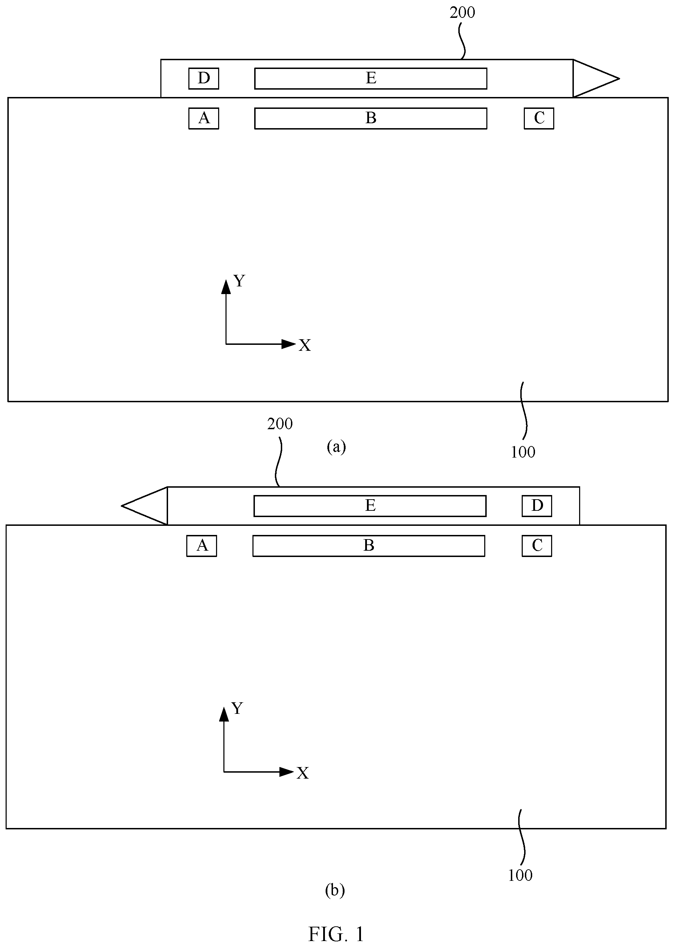

Referring to FIG. 1, FIG. 1 is a schematic diagram of a principle of a possible attachment detection solution. For ease of understanding, in FIG. 1, an electronic device 100 is a tablet computer 100, a to-be-attached accessory 200 is a stylus 200, and the stylus 200 is fixed to a side of the tablet computer 100 through attachment by way of example for description. It is to be understood that the side herein means an area perpendicular to a back cover of the tablet computer 100 and extending in a thickness direction of the tablet computer 100. The tablet computer 100 usually has four sides, and the side for the stylus 200 to be attached may be any of the four sides. For the convenience of distinction and description, the side of the tablet computer 100 used for the stylus 200 to be attached is subsequently referred to as an attachment side.

A Hall device A, an attachment magnet B, and a Hall device C are arranged in sequence in the tablet computer 100 in a direction of an X axis. A detection magnet D and an attachment magnet E are arranged in sequence in the stylus 200 in the direction of the X axis. The stylus 200 is attached through the attachment magnet B and the attachment magnet E, so that the stylus can be fixed to the side of the tablet computer 100 through attachment in a positive direction as shown in (a) of FIG. 1 (that is, a tip of the stylus 200 faces a positive direction of the X axis) or in a negative direction as shown in (b) of FIG. 1 (that is, the tip of the stylus 200 faces a negative direction of the X axis). It is to be understood that the direction of the X axis in the figure is a length direction of the stylus 200 and also a length direction of the attachment side. In the figure, the direction of the Y axis is perpendicular to the direction of the X axis.

As shown in (a) of FIG. 1, when the stylus 200 is fixed to the side of the tablet computer 100 through attachment in the positive direction, the detection magnet D exactly faces the Hall device A, and a strong magnetic field is generated at the Hall device A, thereby triggering the Hall device A to interrupt and reporting that the stylus 200 is attached in position. As shown in (b) of FIG. 1, when the stylus 200 is attached to the side of the tablet computer 100 in the negative direction, the detection magnet D exactly faces the Hall device C, and a strong magnetic field is generated at the Hall device C, thereby triggering the Hall device C to interrupt and reporting that the stylus 200 is attached in position. Based on the interrupt, the tablet computer 100 may start charging the stylus 200 through a wireless charging coil.

It can be seen that in the attachment detection solution shown in FIG. 1, two Hall devices (the Hall device A and the Hall device C) and the detection magnet D are arranged in the tablet computer 100, so that the detection of the stylus 200 during attachment in the positive direction or in the negative direction is realized. However, in the embodiment, the arrangement of two Hall devices obviously increases the cost of the tablet computer, and connection lines of a flexible printed circuit (FPC) board and an elastic piece related to the above two Hall devices further need to be arranged in the tablet computer 100, which occupies more layout space in the tablet computer. In addition, the arrangement of the detection magnet D also occupies more layout space in the stylus 200, which also leads to an increase in the cost of the stylus 200.

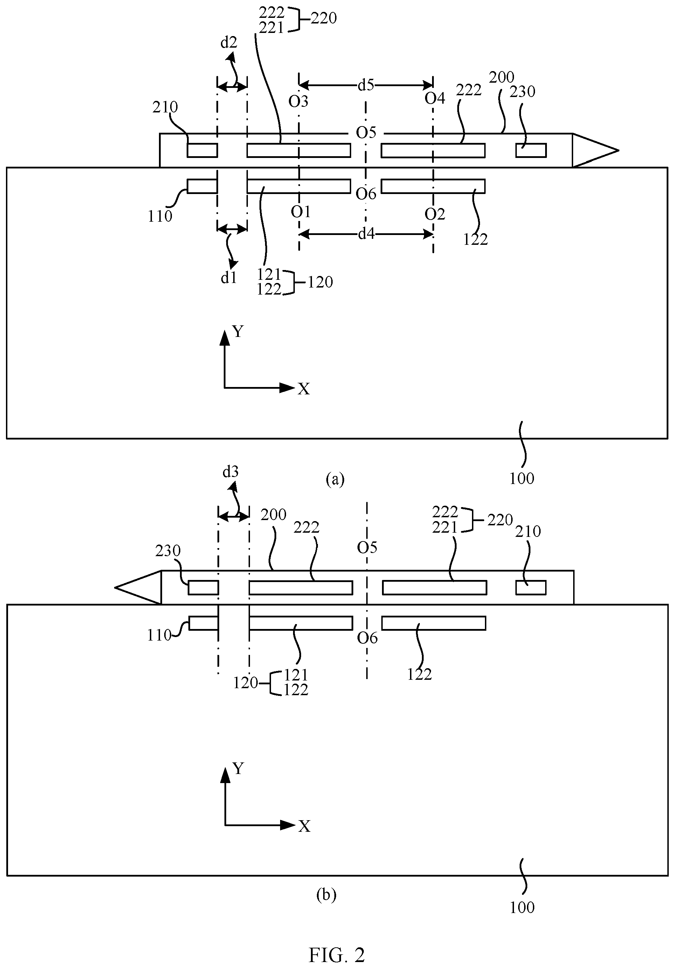

In order to solve the above technical problems, referring to FIG. 2, FIG. 2 is a schematic structural diagram of an accessory detection system according to some embodiments of this application. (a) of FIG. 2 shows a state in which the stylus 200 is fixed to the attachment side of the tablet computer 100 through attachment in the positive direction, and (b) of FIG. 2 shows a state in which the stylus 200 is fixed to the attachment side of the tablet computer 100 through attachment in the negative direction.

The embodiment further improves the accessory detection system from the perspective of saving the costs of the tablet computer 100 and the stylus 200 and simplifying internal structural layouts of the tablet computer and the stylus, which is specifically as follows.

The accessory detection system includes an electronic device 100 and a to-be-attached accessory 200. For ease of understanding, in this embodiment of this application, the electronic device 100 is a tablet computer 100, the to-be-attached accessory 200 is a stylus 200, and the stylus 200 is attached to an attachment side of the tablet computer 100 by way of example for description. It is to be noted that, it is to be understood that in another embodiment, the stylus 200 may further be attached to the back of the tablet computer 100, which can be implemented with reference to FIG. 2, and the details are not described again in this embodiment of this application. In addition, for the convenience of description, a coordinate system is established in FIG. 2. For specific definitions of the X axis and the Y axis, reference may be made to the related descriptions in the embodiment shown in FIG. 1, and the details are not described herein again.

It can be seen from FIG. 2 that the tablet computer 100 includes a magnetic field detection device 110 and a first attachment component 120. The magnetic field detection device 110 and the first attachment component 120 are arranged side by side in the first direction. The first direction is a length direction of the attachment side of the tablet computer 100, that is, the direction of the X axis as shown in the state. The direction is perpendicular to the thickness direction of the tablet computer 100 (the thickness direction of the tablet computer 100 is perpendicular to a paper surface).

The magnetic field detection device 110 is a device with a magnetic field intensity detection function, and is configured to detect the magnetic field intensity of a position of the magnetic field detection device. For example, the magnetic field detection device 110 may be a Hall device, such as a Hall switch. In another embodiment, the magnetic field detection device 110 may also be another device with a magnetic field intensity detection function, which is not specifically limited in this embodiment of this application. It is to be understood that when a magnet is arranged in the stylus 200, the magnet generates a changing magnetic field at the magnetic field detection device 110 as the stylus 200 approaches or moves away from the tablet computer 100. In this embodiment, an attachment condition of the stylus 200 is determined by detecting the magnetic field intensity generated at the magnetic field detection device 110. The following contents are to be described in detail, and the details are not described herein again.

It can be seen from FIG. 2 that the stylus 200 includes a first magnet 210, a second attachment component 220, and a second magnet 230. The first magnet 210, the second attachment component 220, and the second magnet 230 are arranged side by side in the second direction. The second direction is the length direction of the stylus 200, which is also the direction of the X axis as shown in the state.

The second attachment component 220 is configured to be attached to the first attachment component 120, so that the stylus 200 is fixed to the attachment side of the tablet computer 100 through attachment in the first orientation shown in (a) of FIG. 2 or the second orientation shown in (b) of FIG. 2. It is to be understood that the direction is a direction to which the tip of the stylus 200 points. The first orientation herein means a positive direction in which the tip of the stylus 200 faces the X axis in the figure, that is, the foregoing positive direction. The second orientation means a negative direction in which the tip of the stylus 200 points to the X axis in the figure, that is, the foregoing negative direction. The first orientation is opposite to the second orientation, which differ by 180°. For the convenience of understanding, the first orientation is to be referred to as the positive direction and the second orientation is to be referred to as the negative direction.

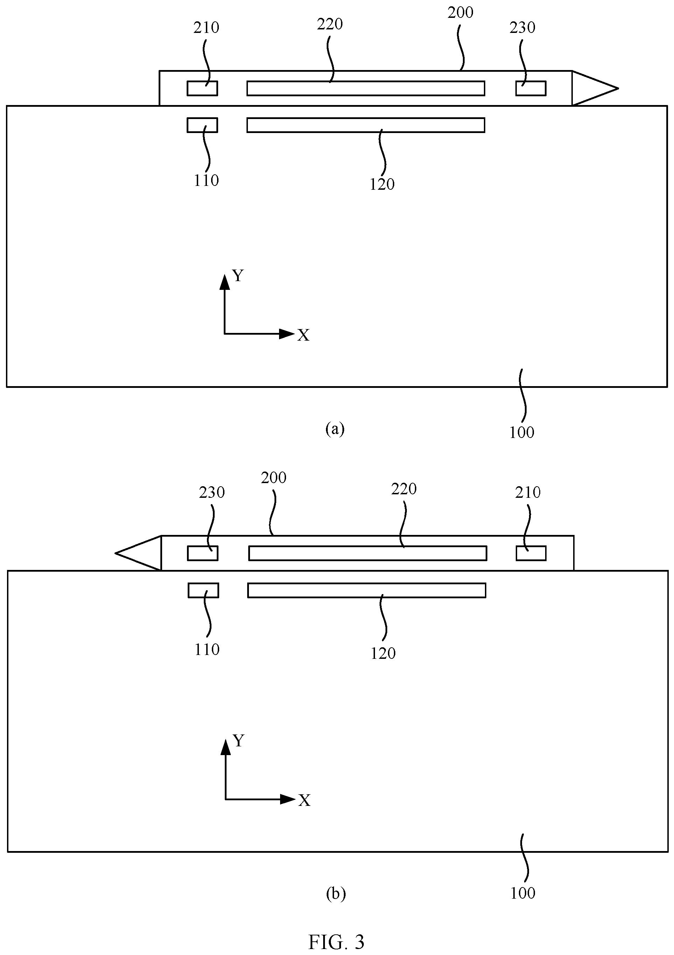

Still referring to FIG. 2, in some embodiments, in order that the stylus 200 can be fixed to the tablet computer 100 in both the forward and negative directions, the first attachment component 120 includes a first attachment member 121 and a second attachment member 122 that are symmetrically arranged and spaced apart in the first direction. The second attachment component 220 includes a third attachment member 221 and a fourth attachment member 222 that are symmetrically arranged and spaced apart in the second direction. In this way, as shown in (a) of FIG. 2, when the first attachment member 121 and the third attachment member 221 are oppositely attached, and the second attachment member 122 and the fourth attachment member 222 are oppositely attached, the stylus 200 is fixed to the attachment side of the tablet computer 100 through attachment in the positive direction. As shown in (b) of FIG. 2, when the first attachment member 121 and the fourth attachment member 222 are attached, and the second attachment member 122 and the third attachment member 221 are attached, the stylus 200 is fixed to the attachment side of the tablet computer 100 through attachment in the negative direction. The opposition in this application means that two opposite components overlap partially or completely in the direction of the Y axis. The non-opposition in this embodiment of this application means no overlapping area exists between two components that are not opposite in the direction of the Y axis. In another embodiment, in order that the stylus 200 can be fixed to the attachment side of the tablet computer 100 in both forward and negative directions, the first attachment component 120 and the second attachment component 220 may also be of a single structure shown in (a) or (b) of FIG. 3, which is not specifically limited in this embodiment of this application.

In the embodiment, the first attachment member 121 and the second attachment member 122 may be single magnets. Specifically, the first attachment member 121 includes, but is not limited to, a magnet or magnetic steel. The second attachment member 122 includes, but is not limited to, a magnet or magnetic steel. A shape of the first attachment member 121 includes, but is not limited to, a cube and a cylinder. A shape of the second attachment member 122 includes, but is not limited to, a cube and a cylinder. Optionally, the specifications of the first attachment member 121 and the second attachment member 122 are the same, that is, the shapes and sizes of the first attachment member 121 and the second attachment member 122 are the same. In this way, during the machining of the electronic device, it is only necessary to select one type of magnet to be used as the first attachment member 121 and the second attachment member 122 respectively, and it is not necessary to select two different magnets to be used as the first attachment member 121 and the second attachment member 122 respectively, so that the machining technology can be simplified. Similarly, for the third attachment member 221 and the fourth attachment member 222, reference may also be made to the embodiment, and the details are not described herein. In another embodiment, the first attachment member 121 and the second attachment member 122 may have structures that can be magnetized, such as metal bodies. In this case, the first attachment member 121 and the second attachment member 122 may be a part of the side of the tablet computer 100, rather than a structure independent of the side.

In some embodiments, a spacing between the first attachment member 121 and the second attachment member 122 is a fourth spacing d4, a spacing between the third attachment member 221 and the fourth attachment member 222 is a fifth spacing d5, and the fourth spacing d4 is equal to the fifth spacing d5. In this way, when the stylus is fixed to the tablet computer through attachment in the positive direction, it may be ensured that the first attachment member 121 and the third attachment member 221 are oppositely attached, and the second attachment member 122 and the fourth attachment member 222 are attached opposite to each other magnetically. When the stylus is fixed to the tablet computer through attachment in the negative direction, it may be ensured that the first attachment member 121 and the fourth attachment member 222 are oppositely attached, and the second attachment member 122 and the third attachment member 221 are oppositely attached. It is to be noted that, the "fourth spacing" in this application is a distance between a center line O1 of the first attachment member 121 and a center line O2 of the second attachment member 122. The "fifth spacing" in this application is a distance between a center line O3 of the third attachment member 221 and a center line O4 of the fourth attachment member 222. It is to be noted that, the "center line" in this application is a center line extending in the direction of the Y axis.

The meaning that the stylus 200 is fixed to the attachment side of the tablet computer 100 through attachment is described below.

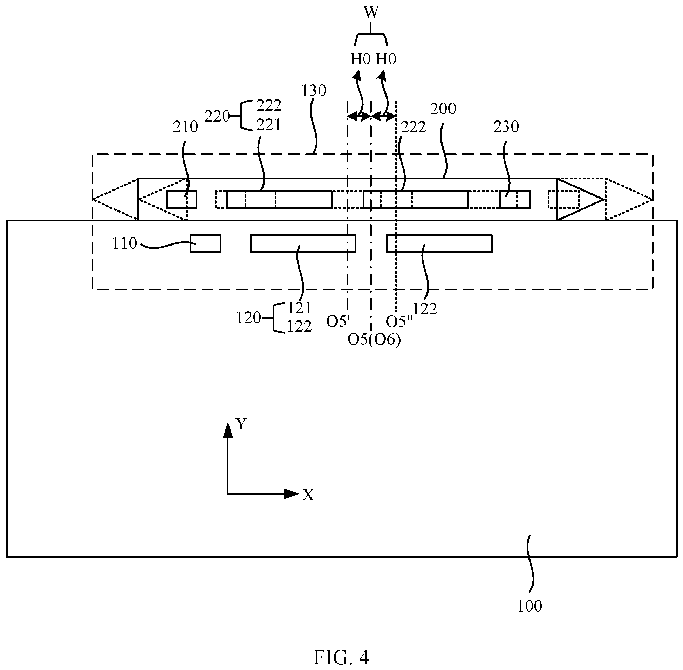

Referring to FIG. 4, FIG. 4 is a schematic diagram of a fixable area of a tablet computer shown in FIG. 2. O5, O5', and O5" are all center lines of the second attachment component 220. O6 is a center line of the first attachment component 120. O5 is a position where the center line of the second attachment component 220 is located when the second attachment component 220 is not offset relative to the first attachment component 120. In this case, O5 and O6 are on a same straight line. O5' is a position where the center line of the second attachment component 220 is located when the second attachment component 220 is offset by H0 relative to the first attachment component 120 in a negative direction of the X axis. In this case, a spacing between O5' and O5 (or O6) is H0. O5" is a position where the center line of the second attachment component 220 is located when the second attachment component 220 is offset by H0 relative to the first attachment component 120 in a positive direction of the X axis. In this case, a spacing between O5" and O5 (or O6) is H0.

It is to be noted that, the term "offset" in this embodiment of this application means that a specific spacing is defined between the center lines of the two bodies that are offset from each other. The term "not offset" in this embodiment of this application means that no spacing is defined between the center lines of the two bodies that are not offset from each other, and the center lines are on the same straight line.

The tablet computer 100 usually has a fixable area 130 for the stylus 200 to be fixed through attachment. The fixable area 130 is an area of the tablet computer 100 for the stylus 200 to be fixed through attachment, and the stylus 200 may be moved to any position in the area to be fixed through attachment. However, once the stylus 200 exceeds the fixable area 130, the stylus 200 is no longer fixed. Based on this, the stylus 200 is fixed to the attachment side of the tablet computer 100 through attachment, which means that the stylus 200 is fixed to any position in the fixable area 130 through attachment.

It is to be noted that, when the second attachment component 220 moves in the positive direction of the X axis relative to the first attachment component 120, the stylus 200 is to move in the positive direction of the X axis; and when the second attachment component 220 moves in the negative direction of the X axis relative to the first attachment component 120, the stylus 200 is to move in the negative direction of the X axis. Therefore, a movable width W of the stylus 200 in the fixable area 130 (the movable width W is indicated by the spacing between O5' and O5" in the figure) depends on the maximum spacing H0 by which the second attachment component 220 and the first attachment component 120 can be offset from each other during the fixation through attachment. The second attachment component 220 may be offset by the maximum spacing H0 in the positive direction of the X axis relative to the first attachment component 120 (indicated by H0 on the right side in the figure), or may be offset by the maximum spacing H0 in the negative direction of the X axis relative to the first attachment component 120 (indicated by H0 on the left side in the figure). Therefore, W = 2H0.

It is to be understood that the maximum spacing H0 by which the second attachment component 220 and the first attachment component 120 may be offset from each other during the fixation through attachment is a maximum spacing that allows the second attachment component 220 and the first attachment component 120 to be offset from each other during attachment together without falling off. This means that when the spacing by which the second attachment component 220 is offset from the first attachment component 120 (including the offset in the positive direction and the offset in the negative direction of the X axis) is less than or equal to H0, the second attachment component 220 and the first attachment component 120 are attached together, and the stylus 200 is to be fixed to the tablet computer 100 through attachment at this time (that is, the stylus 200 is in a state of being fixed in position through attachment). When the spacing by which the second attachment component 220 is offset from the first attachment component 120 (including the offset in the positive direction of the X axis and the offset in the negative direction of the X axis) is greater than H0, the second attachment component 220 and the first attachment component 120 are not attached, and the stylus 200 is no longer fixed to the tablet computer 100 through attachment at this time (that is, the stylus 200 is in a state of being not fixed in position through attachment). It may be learned that the maximum spacing H0 by which the second attachment component 220 and the first attachment component 120 may be offset from each other during attachment is a spacing by which the first attachment component 120 is offset from the second attachment component 220 when the stylus 200 is exactly fixed to the tablet computer 100 through attachment.

The tablet computer 100 and the stylus 200 being fixed through attachment is described in the foregoing content. A specific solution for the tablet computer 100 to detect the attachment state of the stylus 200 is described below.

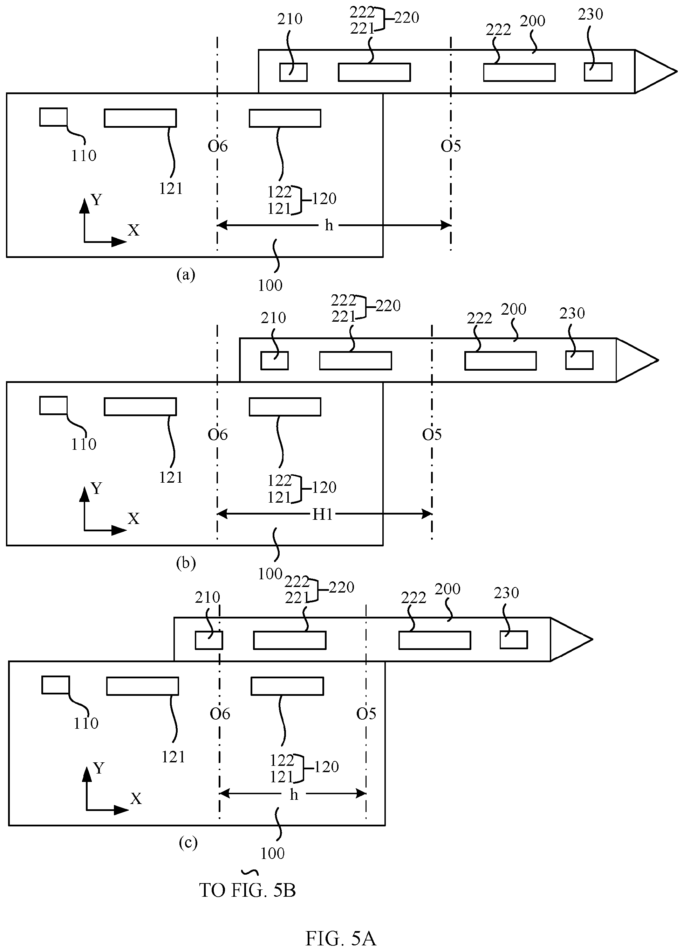

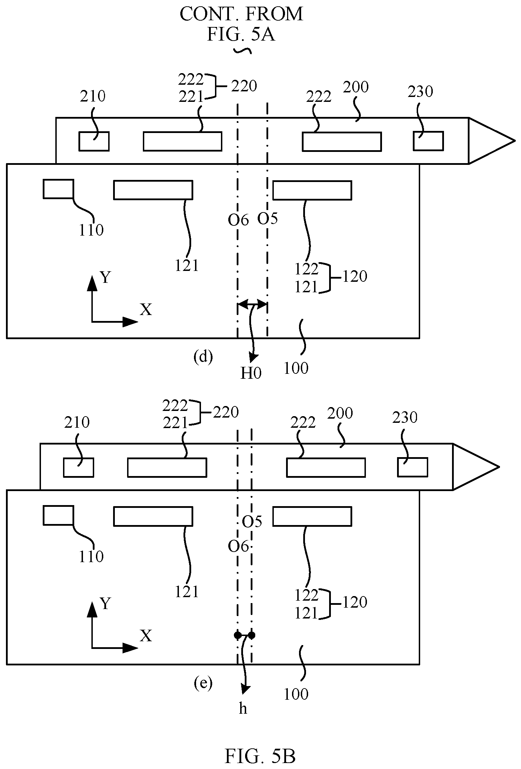

It is to be understood that the stylus 200 has two states, that is, a state of being not fixed in position through attachment and a state of being fixed in position through attachment, relative to the tablet computer 100 regardless of the fixation through attachment in the positive direction or the fixation through attachment in the negative direction. The state of being not fixed in position through attachment is a state in which the stylus 200 is not fixed to the tablet computer 100 through attachment. The state of being fixed in position through attachment is a state in which the stylus 200 is fixed to the tablet computer 100 through attachment. The state of being not fixed in position through attachment is further divided into two sub-states: an unattached state and a misattached state. The above state is described in detail with reference to FIG. 5A and FIG. 5B by using the forward attachment as an example.

Referring to FIG. 5A and FIG. 5B, FIG. 5A and FIG. 5B show three states that a stylus needs to experience in a process of continuously approaching the tablet computer 100 in a positive direction.
(I) Unattached state: It is a state in which no acting force exists between the stylus 200 and the tablet computer 100.
   Referring to (a) of FIG. 5A, when a spacing h by which the first attachment component 120 is offset from the second attachment component 220 is greater than a spacing H1, the first attachment component 120 and the second attachment component 220 are not opposite to each other at all. In this case, no acting force exists between the stylus 200 and the tablet computer 100, and the stylus 200 is in an unattached state.
   The spacing H1 is a spacing by which the first attachment component 120 and the second attachment component 220 are exactly offset, and also a spacing by which the first attachment component 120 is offset from the second attachment component 220 when the stylus 200 is exactly misattached. (b) of FIG. 5A shows the situation that the first attachment component 120 is offset from the second attachment component 220 by the spacing H1.
(II) Misattached state: It is a state in which an acting force exists between the stylus 200 and the tablet computer 100, but the stylus 200 cannot be fixed to the tablet computer 100.
   Referring to (c) of FIG. 5A, when the first attachment component 120 and the second attachment component 220 are opposite (that is, the spacing by which the first attachment component 120 is offset from the second attachment component 220 is less than or equal to H1), but the spacing h by which the first attachment component 120 is offset from the second attachment component 220 is greater than the spacing H0, an acting force exists between the stylus 200 and the tablet computer 100, but the stylus 200 cannot be fixed. In this case, the stylus 200 is in a misattached state.
   The spacing H0 is the maximum spacing by which the first attachment component 120 and the second attachment component 220 may be offset from each other during the fixation through attachment, that is, a spacing by which the first attachment component 120 is offset from the second attachment component 220 when the stylus 200 is exactly fixed to the tablet computer 100 through attachment. (d) of FIG. 5B shows the situation that the first attachment component 120 is offset from the second attachment component 220 by the spacing H0.
(III) Fixed state through attachment: The stylus 200 is fixed to the tablet computer 100 through attachment, that is, the stylus 200 is fixed in position through attachment. Referring to (e) of FIG. 5B, when the first attachment component 120 and the second attachment component 220 are opposite, and the spacing h by which the first attachment component 120 is offset from the second attachment component 220 is less than or equal to the spacing H0, the stylus 200 may be fixed to the tablet computer 100 through attachment. In this case, the stylus 200 is in a fixed state through attachment.

It is to be noted that, (a) of FIG. 5A to (c) of FIG. 5A all show the state of being not fixed in position through attachment. (d) of FIG. 5B to (e) of FIG. 5B all show the state of being fixed in position through attachment.

It is to be understood that when the stylus 200 is switched from the state of being not fixed in position through attachment to the state of being fixed in position through attachment, the first magnet 210 when placed in the positive direction (or the second magnet 230 when placed in the negative direction) is to be switched from a position farther away from the magnetic field detection device 110 to a position closer to the magnetic field detection device 110. Since the first magnet 210 (or the second magnet 230) may generate a magnetic field, the first magnet 210 (or the second magnet 230) generates two magnetic fields with different intensities at the magnetic field detection device 110. Specifically, when the stylus 200 is in the state of being fixed in position through attachment, the first magnet 210 (or the second magnet 230) is to generate a relatively strong magnetic field at the magnetic field detection device 110. When the stylus 200 is in the state of being not fixed in position through attachment, the first magnet 210 (or the second magnet 230) is to generate a relatively weak magnetic field at the magnetic field detection device 110, or even no magnetic field.

It can be seen from the above that the magnetic field intensity generated by the first magnet 210 (or the second magnet 230) at the position of the magnetic field detection device 110 is different due to the different attachment states of the stylus 200 relative to the tablet computer 100. Based on this, in this embodiment of this application, the magnetic field intensity of the first magnet 210 (or the second magnet 230) at the magnetic field detection device 110 is distinguished by setting a preset threshold, so as to determine the attachment state of the stylus 200, which is convenient for the tablet computer 100 to perform some subsequent functions. Specifically, the magnetic field intensity greater than the preset threshold is considered as a relatively strong magnetic field. In this case, the magnetic field detection device 110 is to be triggered to output first indication information, which is used to indicate that the stylus 200 is fixed in position through attachment; and the magnetic field intensity less than the preset threshold is considered as a relatively weak magnetic field. In this case, the magnetic field detection device 110 is to be triggered to output second indication information, which is used to indicate that the stylus 200 is not fixed in position through attachment.

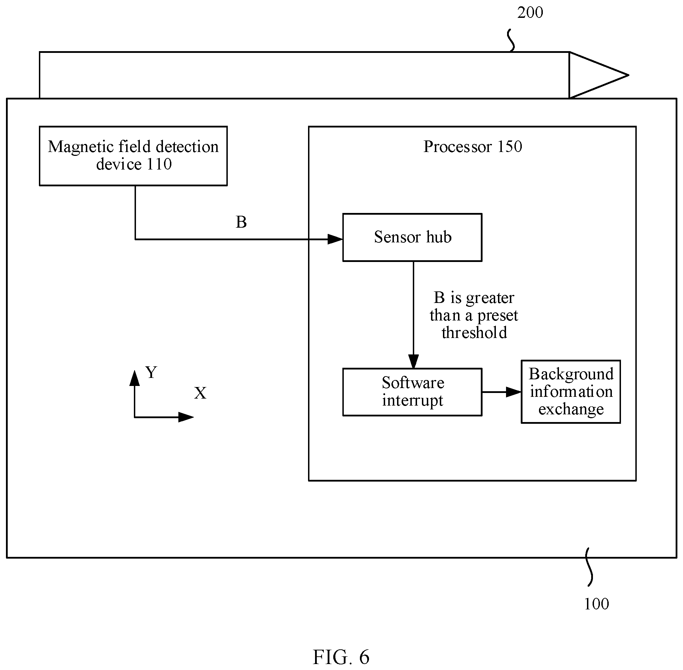

In some embodiments, referring to FIG. 6, FIG. 6 is an architecture diagram I of a detection principle of the accessory detection system shown in FIG. 2. A processor 150 is connected to a magnetic field detection device 110.

The magnetic field detection device 110 is configured to obtain a magnetic field intensity information of a position of the magnetic field detection device, and output the magnetic field intensity information to the processor 150. The processor 150 is configured to receive magnetic field intensity information B outputted by the magnetic field detection device 110, and determine whether the magnetic field intensity information B is greater than a preset threshold, so as to determine the attachment state of the stylus 200.

It is to be noted that, the processor 150 is a component that may be configured to execute application program code and invoke a related module to implement a function of the tablet computer 100 in this embodiment of this application. The processor 150 may include one or more processing units. For example, the processor 150 may include an application processor (application processor, AP) unit, a modem processor unit, a graphics processing unit (graphics processing unit, GPU), an image signal processor (image signal processor, ISP) unit, a processor unit, a video codec unit, a digital signal processor (digital signal processor, DSP) unit, a baseband processor unit, a sensor hub (Sensor Hub) unit, and/or a neural-network processing unit (neural-network processing unit, NPU). Different processing units may be separate devices, or may be integrated into one or more processors. Based on this, optionally, the above process of determining whether the magnetic field intensity information B is greater than a preset threshold may be performed by the sensor hub (Sensor Hub) in the processor 150. Specifically, the sensor hub (Sensor Hub) receives the magnetic field intensity information outputted from the magnetic field detection device 110, and determines whether the magnetic field intensity information is greater than the preset threshold. When the magnetic field intensity information is greater than the preset threshold, a software interrupt is triggered. Based on the software interrupt, the processor 150 may determine that the stylus 200 is fixed in position through attachment, and then perform information exchange in the background, so as to perform subsequent functions, such as a function of charging the stylus 200, so as to realize the charging of the stylus 200.

In the embodiment, the magnetic field intensity information whose value is greater than the preset threshold is directly outputted as the first indication information indicating that the stylus 200 is in a state of being fixed in position through attachment. The magnetic field intensity information whose value is less than the preset threshold is outputted as the second indication information indicating that the stylus 200 is in a state of being not fixed in position through attachment. In this case, the processor 150 further needs to determine the magnitude of the magnetic field intensity information compared with the preset threshold, and inform the attachment state of the stylus 200 by triggering a software interrupt. However, in this embodiment, the solution that the processor determines the attachment state of the stylus 200 by comparing the preset threshold with the magnetic field intensity information is a solution of triggering a software interrupt. When the preset threshold setting is unreasonable, the preset threshold may be adjusted at any time to adjust the condition of triggering an interrupt. Compared with the manner of directly outputting a hardware interrupt, the adjustment of the preset threshold is more flexible, and the implementation cost is lower.

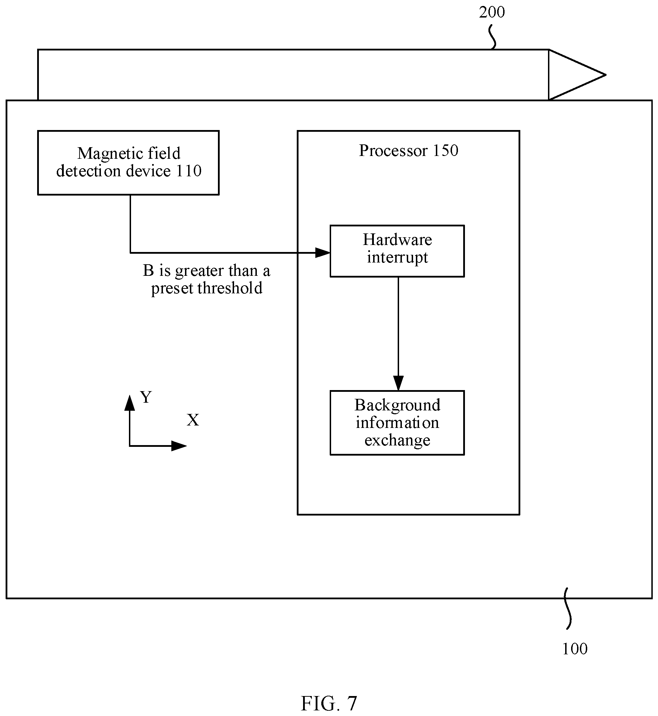

In some other embodiments, referring to FIG. 7, FIG. 7 is an architecture diagram II of a detection principle of the accessory detection system shown in FIG. 2. A processor 150 is connected to a magnetic field detection device 110.

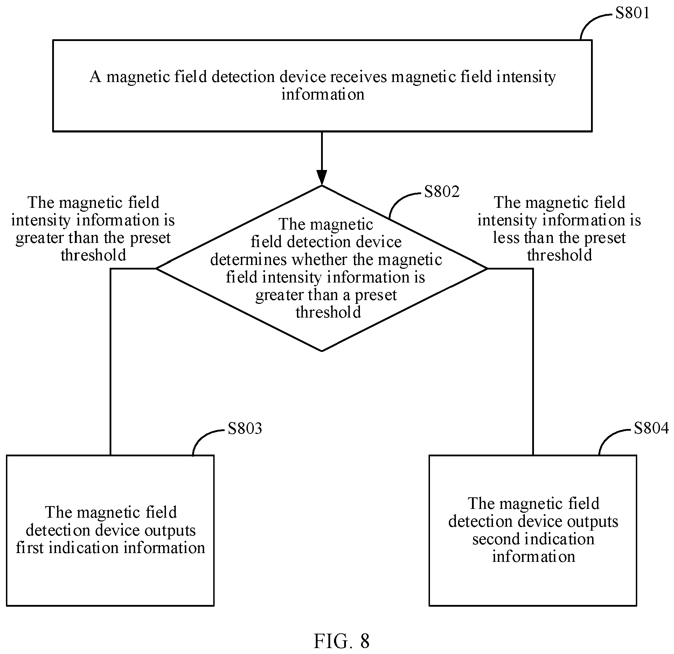

The magnetic field detection device 110 is configured to obtain magnetic field intensity information of a position of the magnetic field detection device, and output first indication information when the magnetic field intensity information B is greater than a preset threshold, to report the hardware interrupt; and output second indication information when the magnetic field intensity information is less than the preset threshold. Specifically, referring to FIG. 8, FIG. 8 is a flowchart of detection of a magnetic field detection device according to some embodiments of this application. The embodiment specifically includes the following steps S801 to S804.

S801. The magnetic field detection device obtains magnetic field intensity information of a position of the magnetic field detection device.

S802. The magnetic field detection device determines whether the magnetic field intensity information is greater than a preset threshold. If the magnetic field intensity information is greater than the preset threshold, step S803 is performed. If the magnetic field intensity information is less than the preset threshold, step S804 is performed.

For a case that the magnetic field intensity information is equal to the preset threshold, it depends based on the different values of the preset threshold. The subsequent implementation of this application is determined based on the magnetic field intensity information when the stylus 200 is exactly fixed through attachment. Therefore, when the magnetic field intensity information is equal to the preset threshold, S803 may be performed.

S803. The magnetic field detection device outputs first indication information.

The first indication information is used to indicate that the stylus 200 is fixed in position through attachment, that is, in a state of being fixed in position through attachment.

S804. The magnetic field detection device outputs second indication information.

The second indication information is used to indicate that the stylus 200 is not fixed in position through attachment, that is, in a state of being not fixed in position through attachment.

For example, the first indication information may be a bit "1", and the second indication information may be a bit "0". Certainly, in another embodiment, the first indication information may also be a bit "0", and the second indication information may also be a bit "1", which is not specifically limited in this embodiment of this application.

On this basis, the processor 150 is connected to the magnetic field detection device 110, and is configured to determine, when receiving the hardware interrupt outputted by the magnetic field detection device 110, that the stylus 200 is fixed in position through attachment, and then perform information exchange in the background, so as to perform subsequent functions, such as a function of charging the stylus 200, so as to realize the charging of the stylus 200. In the embodiment, the indication information outputted by the magnetic field detection device 110 directly indicates the attachment state of the stylus 200, and the processor of the tablet computer 100 does not need to determine the magnetic field intensity information and the preset threshold to determine the attachment state. The selection of the preset threshold is to be described in detail in the following embodiments, and the details are not described herein again. In order to facilitate understanding, the following embodiments related to this part are all to be described by using the embodiments shown in FIG. 7 and FIG. 8 as examples. Reference may be made to the embodiment based on the embodiment shown in FIG. 6, and the details are not described again subsequently.

It may be learned from the foregoing content that the tablet computer 100 determines the attachment state of the stylus 200 based on different magnetic fields caused by the first magnet 210 (or the second magnet 230) at the magnetic field detection device 110 before and after the stylus 200 is fixed through attachment in the forward (or reverse) direction. It can be seen that the key to realizing the attachment detection solution is before and after the stylus 200 is fixed through attachment, that is, when the stylus 200 is fixed to the tablet computer 100 through attachment in the positive direction (or the negative direction) and is not fixed to the tablet computer 100 through attachment in the positive direction (or the negative direction), the first magnet 210 (or the second magnet 230) can respectively generate, at the magnetic field detection device 110, magnetic field intensity information that can trigger the magnetic field detection device 110 to output the first indication information and magnetic field intensity information that can trigger the magnetic field detection device 110 to output the second indication information. That is to say, the first magnet 210 (or the second magnet 230) can respectively generate magnetic field intensity information greater than the preset threshold and magnetic field intensity information less than the preset threshold at the magnetic field detection device 110.

Based on this, the arrangement positions of the magnetic field detection device 110, the first magnet 210, and the second magnet 230 are to satisfy the following conditions.

The first magnet 210 generates a magnetic field greater than the preset threshold at the magnetic field detection device 110 when the stylus 200 is fixed to the tablet computer 100 through attachment in the positive direction, and triggers the magnetic field detection device 110 to output first indication information. The first indication information is used to indicate that the stylus 200 is fixed in position through attachment. The first magnet generates a magnetic field less than the preset threshold at the magnetic field detection device 110 when the stylus 200 is not fixed to the tablet computer 100 through attachment in the positive direction, and triggers the magnetic field detection device 110 to output second indication information. The second indication information is used to indicate that the stylus 200 is not fixed in position through attachment.

The second magnet 230 generates a magnetic field greater than the preset threshold at the magnetic field detection device 110 when the stylus 200 is fixed to the tablet computer 100 through attachment in the negative direction, and triggers the magnetic field detection device 110 to output first indication information. The second magnet generates a magnetic field less than the preset threshold at the magnetic field detection device 110 when the stylus 200 is not fixed to the tablet computer 100 through attachment in the negative direction, and triggers the magnetic field detection device 110 to output second indication information.

During the specific implementation, the above triggering conditions can be satisfied by adjusting a second spacing d2 (or a third spacing d3) between the first magnet 210 (or the second magnet 230) and the second attachment component 220 or a first spacing d1 between the magnetic field detection device 110 and the first attachment component 120.

It may be learned from the foregoing that the stylus 200 is fixed to the tablet computer 100 through attachment, which means that a spacing by which the second attachment component 220 is offset from the first attachment component 120 is less than or equal to H0. Based on this, further, the first magnet 210 triggering the magnetic field detection device 110 to output the first indication information when the stylus 200 is fixed to the tablet computer 100 through attachment in the positive direction means that the first magnet 210 can trigger the magnetic field detection device 110 to output the first indication information when the spacing by which the second attachment component 220 is offset from the first attachment component 120 is less than or equal to H0, not just in the case shown in (a) of FIG. 2. The second magnet 230 triggering the magnetic field detection device 110 to output the first indication information when the stylus 200 is fixed to the tablet computer 100 through attachment in the negative direction means that the second magnet 230 can trigger the magnetic field detection device 110 to output the first indication information when the spacing by which the second attachment component 220 is offset from the first attachment component 120 is less than or equal to H0, not just in the case shown in (b) of FIG. 2.

It is to be noted that, due to the existence of H0, the first magnet 210 (or the second magnet 230) may be not opposite to the magnetic field detection device 110 at all when the stylus 200 is fixed to the tablet computer 100 through attachment. In this case, the magnetic field intensity generated by the first magnet 210 (or the second magnet 230) at the magnetic field detection device 110 for triggering the output of the first indication information is relatively small, and a difference between the magnetic field intensity generated by the first magnet (or the second magnet) and the magnetic field intensity when the stylus is not fixed through attachment is relatively small. In this case, in order to distinguish different attachment states, the magnetic field detection device 110 is required to accurately detect the magnetic field intensity at each moment in the process of the stylus 200 approaching the tablet computer 100, which has higher requirements for the sensitivity of the magnetic field detection device 110.

Based on this, further, still referring to FIG. 2, in some embodiments, the first magnet 210 is opposite to the magnetic field detection device 110 when the stylus 200 is fixed to the tablet computer 100 through attachment in the positive direction. The second magnet 230 is opposite to the magnetic field detection device 110 when the stylus 200 is fixed to the tablet computer 100 through attachment in the negative direction. In this way, when the stylus 200 is fixed to the tablet computer 100 through attachment in the positive direction, the first magnet 210 is opposite to the magnetic field detection device 110, which are spaced apart by a small spacing, so that a larger magnetic field can be generated at the magnetic field detection device 110, which reduces the requirement for the sensitivity of the magnetic field detection device 110. The effect of fixation through attachment in the negative direction is the same, and the details are not described herein again. In another embodiment, the first magnet 210 may not be opposite to the magnetic field detection device 110 when the stylus 200 is fixed through attachment in the positive direction. The second magnet 230 may not be opposite to the magnetic field detection device 110 when the stylus 200 is fixed through attachment in the negative direction, which is specifically limited in this embodiment of this application.

It is to be noted that, the opposition in this embodiment of this application means that two components overlap partially or completely in the direction of the Y axis. The non-opposition in this embodiment of this application means no overlapping area exists between two components in the direction of the Y axis. For example, the first magnet 210 is opposite to the magnetic field detection device 110, which means that at least part of an area of the first magnet 210 and at least part of an area of the magnetic field detection device 110 overlap in the direction of the Y axis. The second magnet 230 is opposite to the magnetic field detection device 110, which means that at least part of an area of the second magnet 230 and at least part of an area of the magnetic field detection device 110 overlap in the direction of the Y axis.

In the specific implementation process, after H0 is determined, a length of the first magnet 210 (or the second magnet 230) or the magnetic field detection device 110 may be increased, so that the first magnet 210 (or the second magnet 230) is opposite to the magnetic field detection device 110 when the stylus 200 is fixed to the tablet computer 100 through attachment in the forward (or reverse) direction.

Further, in order that the first magnet 210 and the second magnet 230 can be opposite to the magnetic field detection device 110 when the attachment direction of the stylus 200 is reversed, referring to FIG. 4, in some embodiments, the arrangement may be performed based on the following structural features.

The first magnet 210 and the second magnet 230 are symmetrically arranged with respect to a center line O5 of the second attachment component 220, and a movable width W (that is, 2H0) of the stylus 200 in the fixable area 130 on the tablet computer 100 is less than a preset spacing. The preset spacing is used to ensure that the first magnet 210 can be opposite to the magnetic field detection device 110 when the stylus 200 is fixed at any position in the fixable area 130 through attachment in the positive direction. In the specific implementation process, the preset spacing may be twice or less than a spacing by which the first magnet 210 is offset from the magnetic field detection device 110 when exactly not opposite, and the specific value of the preset spacing is not specifically limited in this embodiment of the present application.

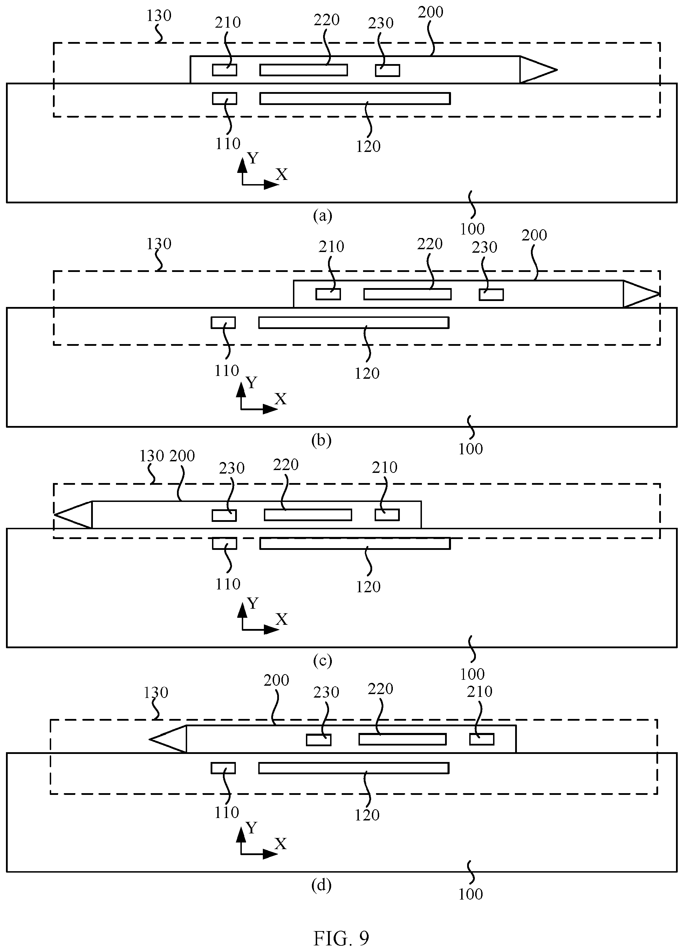

It is to be understood that a larger movable width W of the stylus 200 in the fixable area 130 means that the stylus 200 can move and be fixed in a wider area on the tablet computer 100. When the stylus 200 can move and be fixed in a wide area, it is difficult for the user to arrange the first magnet 210 and the magnetic field detection device 110 to be opposite when the stylus 200 is fixed to the tablet computer 100 through attachment in the positive direction. As shown in (a) of FIG. 9, the first magnet 210 can be opposite to the magnetic field detection device 110 only when the stylus 200 is fixed, through attachment in the positive direction, at a position where the fixable area is close to the magnetic field detection device 110. As shown in (b) of FIG. 9, when the stylus 200 is fixed, through attachment in the positive direction, at a position where the fixable area is away from the magnetic field detection device 110, the first magnet 210 is not opposite to the magnetic field detection device 110, and it is difficult to trigger the magnetic field detection device 110 to perform detection. As shown in (c) of FIG. 9, the second magnet 230 can be opposite to the magnetic field detection device 110 only when the stylus 200 is fixed, through attachment in the negative direction, at a position where the fixable area is close to the magnetic field detection device 110. As shown in (d) of FIG. 9, when the stylus 200 is fixed, through attachment in the positive direction, at a position where the fixable area is away from the magnetic field detection device 110, the second magnet 230 is not opposite to the magnetic field detection device 110, and it is difficult to trigger the magnetic field detection device 110 to perform detection.

Based on this, still refer to FIG. 4. In this embodiment of this application, the movable width W of the stylus 200 on the tablet computer 100 is set to be less than the preset spacing. In this way, the stylus 200 can only be moved and fixed in a small area on the tablet computer 100. When the stylus 200 is fixed at any position in the area through attachment in the positive direction, the first magnet 210 can be opposite to the magnetic field detection device 110, thereby triggering the tablet computer 100 to perform detection. In addition, since the first magnet 210 and the second magnet 230 are arranged symmetrically with respect to the center line O5 of the second attachment component 220, a spacing between the first magnet 210 and the center line O5 of the second attachment component 220 is the same as a spacing between the second magnet 230 and the center line O5 of the second attachment component 220. Based on this, the second magnet 230 can also be opposite to the magnetic field detection device 110 when the stylus 200 is fixed at any position in the fixable area through attachment in the negative direction.

It may be learned from the foregoing content that the movable width W of the stylus 200 in the fixable area 130 is twice the maximum spacing H0 by which the second attachment component 220 and the first attachment component 120 may be offset from each other during attachment, that is, W = 2H0. Based on this, the movable width W of the stylus 200 on the tablet computer 100 can be ensured to be less than the preset spacing by restricting the maximum spacing H0 by which the second attachment component 220 and the first attachment component 120 may be offset from each other during attachment. In the specific implementation process, the spacing H0 can be controlled by designing the first attachment component 120 and the second attachment component 220.

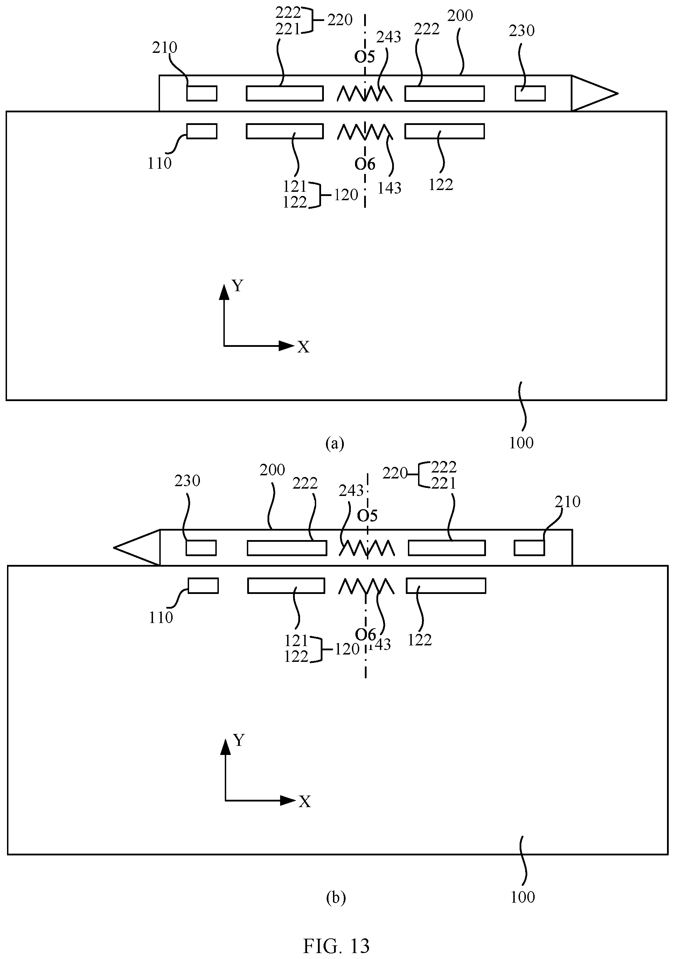

It is to be noted that, a reference factor for setting the maximum spacing H0 may be charging efficiency, which is described in detail in FIG. 13 below, and the details are not described herein again. Based on this, when the maximum spacing H0 is determined, the preset spacing may also be adjusted to ensure that the movable width W of the stylus 200 on the tablet computer 100 is less than the preset spacing. For example, the lengths of the first magnet 210 and the magnetic field detection device 110 may be adjusted to adjust the spacing by which the first magnet 210 and the magnetic field detection device 110 are offset from each other when exactly not opposite, thereby adjusting the preset spacing.

In some other embodiments, for the case in FIG. 9, the stylus 200 may also be assisted in being fixed to the tablet computer 100 through attachment by using marks on the tablet computer 100, so that the spacing by which the second attachment component 220 is offset from the first attachment component 120 during attachment can ensure that the movable width W is less than the preset spacing, so as to ensure that the stylus 200 can trigger the tablet computer 100 to perform detection after the attachment direction is reversed, which is not specifically limited in this embodiment of this application.

Further, still referring to FIG. 2, the first magnet 210 and the second magnet 230 are symmetrically arranged with respect to the center line O5 of the second attachment component 220. When the stylus 200 is fixed through attachment in the positive direction, the first magnet 210 exactly faces the magnetic field detection device 110 if the second attachment component 220 exactly faces the first attachment component 120. It is to be noted that, directly facing in this application means coincidence of center lines.

It is to be understood that, since the first magnet 210 and the second magnet 230 are arranged symmetrically with respect to the center line O5 of the second attachment component 220, a spacing between the first magnet 210 and the center line O5 of the second attachment component 220 is the same as a spacing between the second magnet 230 and the center line O5 of the second attachment component 220. Based on this, when the stylus 200 is fixed through attachment in the negative direction, the second magnet 230 can also exactly face the magnetic field detection device 110 if the first attachment component 120 exactly faces the second attachment component 220. The embodiment provides a solution that the first magnet 210 and the second magnet 230 can still be opposite to the magnetic field detection device 110 after the attachment direction is reversed.

It can be seen from the foregoing that in the accessory detection system shown in FIG. 2, the magnetic field intensity information generated by the first magnet 210 (or the second magnet 230) at the position of the magnetic field detection device 110 is obtained through the magnetic field detection device 110, and the intensity of the magnetic field intensity information is distinguished, so as to accurately determine whether the stylus 200 is fixed in position through attachment. In addition, the first magnet 210 can trigger the magnetic field detection device 110 to output the first indication information when the stylus 200 is fixed to the tablet computer 100 through attachment in a positive direction, and the second magnet 230 can trigger the magnetic field detection device 110 to output the first indication information when the stylus 200 is fixed to the tablet computer 100 through attachment in a negative direction, thereby realizing the detection during the fixation in position through attachment in two orientations.

It can be seen that in the accessory detection system shown in FIG. 2, by arranging a magnetic field detection device 110 in the tablet computer 100, and arranging two magnets, that is, the first magnet 210 and the second magnet 230, in the stylus 200, the detection of the stylus 200 when fixed in position through attachment in the positive direction or in the negative direction is realized. Compared with the attachment detection solution shown in FIG. 1, the cost of a magnet added in the stylus 200 is negligible, but the expense of a magnetic field detection device 110 in the tablet computer 100 is saved, thereby reducing the consumable cost.

In addition, for the stylus 200 fixed to a side of the tablet computer 100 through attachment, when a Hall device is selected as the magnetic field detection device 110, in view of the detection principle of the Hall device, in order to cause a magnetic line of the magnet in the stylus 200 to vertically pass through a Hall plate of the Hall device, it is necessary to erect and fix the Hall device so that the Hall plate is perpendicular to the motherboard. In this case, the Hall device is to be connected to the motherboard through devices such as an elastic piece. Therefore, after the overheads of a Hall device are saved, the consumption of these accessories and the consumable cost are naturally saved. In addition, since a magnetic field detection device 110 is omitted in the tablet computer 100, an area and internal space of a PCB in the tablet computer 100 are saved.

It is to be noted that, in the accessory detection system shown in FIG. 2, the first magnet 210 and the second magnet 230 independent of each other are arranged for triggering the magnetic field detection device 110, instead of using the first attachment component 120 and the second attachment component 220. Therefore, the overall design idea of FIG. 1 is that the first magnet 210, the second magnet 230, and the magnetic field detection device 110 are configured to detect the attachment state, and the first attachment component 120 and the second attachment component 220 are only used for attachment, which are completely decoupled in function and do not interfere with each other. Therefore, in the solution, the preset threshold for distinguishing the magnitude of magnetic field intensity is to be determined based on the magnetic field intensity information outputted by the magnetic field detection device 110 when no other magnetic field devices exist around the magnetic field detection device (devices capable of generating magnetic fields except the detection magnet, such as the first attachment component 120 and the second attachment component 220). Moreover, the magnetic field detection device 110 configured to obtain the magnetic field intensity information is to be far away from the magnetic field devices such as the first attachment component 120 and the second attachment component 220, so as to prevent these magnetic field devices from affecting the magnetic field of a position of a Hall device and affecting the determination of the attachment state.

Based on the above concept, the preset threshold for distinguishing the attachment state is described first below.

It may be learned from the embodiments of FIG. 5A and FIG. 5B that the stylus 200 has two states, that is, a state of being fixed in position through attachment and a state of being not fixed in position through attachment, relative to the tablet computer 100. It may be seen from FIG. 5A and FIG. 5B that when the stylus 200 is exactly in the state of being fixed in position through attachment, a dividing point of the above two states is formed. Based on this, in this embodiment of the present application, the magnetic field intensity information outputted by the magnetic field detection device 110 triggered by the first magnet 210 or the second magnet 230 may be used as the preset threshold when the stylus 200 is exactly attached in position. It is to be noted that, the state in which the stylus 200 is exactly fixed in position through attachment is a state in which the second attachment component 220 is offset from the first attachment component 120 by the maximum spacing H0. Based on this, in this embodiment of this application, when the second attachment component 220 is offset from the first attachment component 120 by the maximum spacing H0, the magnetic field intensity information outputted by the magnetic field detection device 110 only triggered by the first magnet 210 or the second magnet 230, but not by the first attachment component 120 and the second attachment component 220 may be used as the preset threshold.

In this case, as long as the stylus 200 can be fixed to the tablet computer 100 through attachment in the positive direction (that is, the spacing by which the first attachment component 120 is offset from the second attachment component 220 is greater than or equal to H0), the stylus 200 can generate a magnetic field intensity greater than or equal to the preset threshold, and trigger the magnetic field detection device 110 to output the first indication information. Once the stylus 200 cannot be fixed to the tablet computer 100 through attachment in the positive direction (that is, the spacing by which the first attachment component 120 is offset from the second attachment component 220 is less than H0), only a magnetic field intensity less than the preset threshold can be generated, and the magnetic field detection device 110 cannot be triggered to output the first indication information. In the embodiment, if the tablet computer 100 needs to perform some operations (charging) on the stylus 200 based on the attachment condition of the stylus 200, once the user fixes the stylus 200 through attachment, the magnetic field detection device 110 can be triggered to output the first indication information indicating that the stylus 200 is fixed in position through attachment, so that the tablet computer 100 can start charging the stylus 200 without fixing the stylus 200 to a specific position through attachment, which is easy to operate and leads to better user experience.

In order to facilitate the determination of the specific value of the preset threshold, the value of the magnetic field intensity information outputted by the magnetic field detection device 110 triggered only by the first magnet 210 or only by the second magnet 230 when the second attachment component 220 is offset from the first attachment component 120 by the maximum spacing H0 is described below.

For the accessory detection system shown in FIG. 2, when the stylus 200 is fixed through attachment in the positive direction, the first magnet 210 exactly faces the magnetic field detection device 110 if the second attachment component 220 exactly faces the first attachment component 120. When the stylus 200 is fixed through attachment in the negative direction, the second magnet 230 exactly faces the magnetic field detection device 110 if the second attachment component 220 exactly faces the first attachment component 120. This means that the spacing by which the second attachment component 220 is offset from the first attachment component 120 indicates that the first magnet 210 (or the second magnet 230) is offset from the magnetic field detection device 110 by the same spacing. Based on this, when the second attachment component 220 is offset from the first attachment component 120 by the maximum spacing H0, the maximum spacing by which the first magnet 210 during fixation through attachment in the positive direction (or the second magnet 230 during fixation through attachment in the negative direction) is offset from the magnetic field detection device 110 is also H0.

Based on this, in the specific implementation process, when the spacing H0 is set, the first magnet 210 and the magnetic field detection device 110 may be offset by H0 to obtain a magnetic field intensity B0 generated by the first magnet 210 at the magnetic field detection device 110, which is used as the preset threshold. In the specific implementation process, in order to leave margin, the final preset threshold may slightly fluctuate on the basis of the magnetic field intensity B0.

In the accessory detection system shown in FIG. 2, the maximum spacing (assumed as H1) by which the first magnet 210 during fixation through attachment in the positive direction (or the second magnet 230 during fixation through attachment in the negative direction) is offset from the magnetic field detection device 110 is the maximum spacing H0 by which the second attachment component 220 is offset from the first attachment component 120. In another embodiment, the maximum spacing H1 by which the first magnet 210 during fixation through attachment in the positive direction (or the second magnet 230 during fixation through attachment in the negative direction) is offset from the magnetic field detection device 110 may not be the maximum spacing H0 by which the second attachment component 220 is offset from the first attachment component 120.

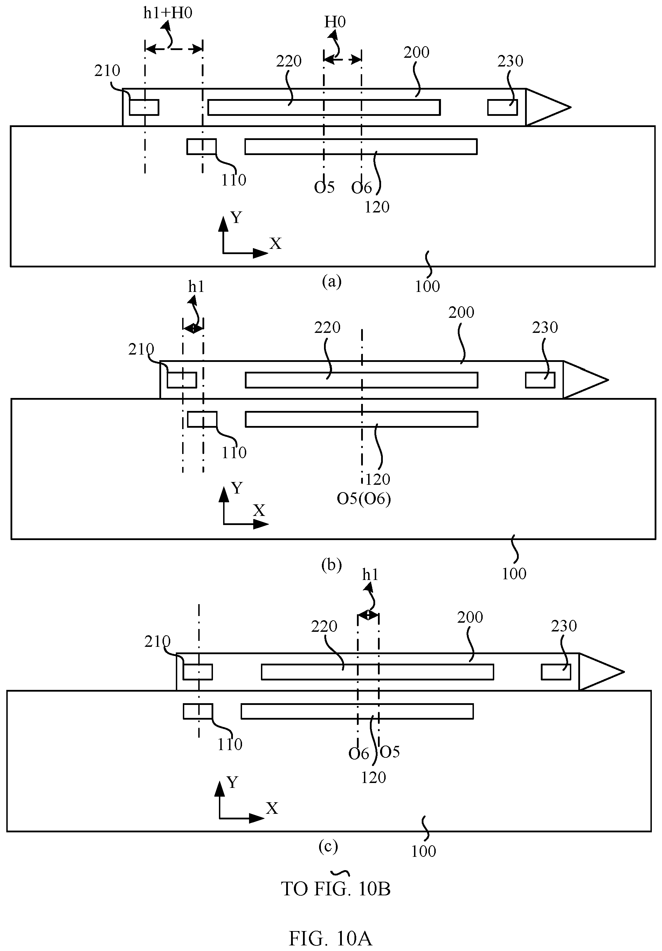

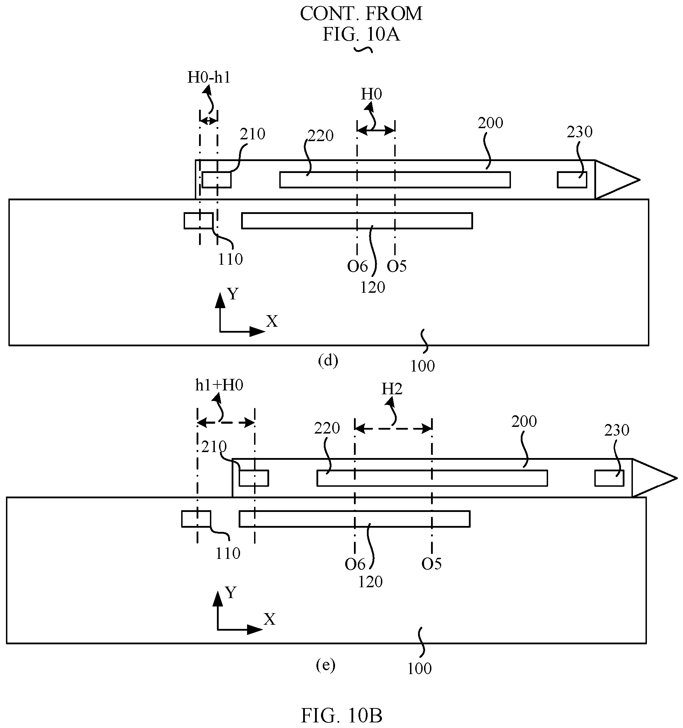

For example, referring to FIG. 10A and FIG. 10B, FIG. 10A and FIG. 10B are schematic structural diagrams of an accessory detection system according to some other embodiments of this application. FIG. 10A and FIG. 10B show four spacings by which the first magnet 210 may be offset from the magnetic field detection device 110 by using the stylus 200 being fixed through attachment in a positive direction as an example. In the figure, when the stylus 200 is fixed through attachment in the positive direction, the second attachment component 220 exactly faces the first attachment component 120, but the first magnet 210 does not exactly face the magnetic field detection device 110, but offset by h1 in a negative direction of the X axis (the positive direction of the X axis is denoted by +, and the negative direction of the X axis is denoted by - subsequently), where h1 is less than H0.

As shown in (a) of FIG. 10A, when the second attachment component 220 is offset from the first attachment component 120 by -H0, the first magnet 210 is offset from the magnetic field detection device 110 by -(h1+H0). As shown in (b) of FIG. 10A, when the second attachment component 220 exactly faces the first attachment component 120, the first magnet 210 does not exactly face the magnetic field detection device 110, and the first magnet 210 is offset from the magnetic field detection device 110 by -h1. As shown in (c) of FIG. 10A, when the second attachment component 220 is offset from the first attachment component 120 by +h1, the first magnet 210 exactly faces the magnetic field detection device 110. As shown in (d) of FIG. 10B, when the second attachment component 220 is offset from the first attachment component 120 by +H0, the first magnet 210 is offset from the magnetic field detection device 110 by +(H0-h1). In the embodiment, the spacing by which the second attachment component 220 is offset from the first attachment component 120 is different from the spacing by which the first magnet 210 is offset from the magnetic field detection device 110. As shown in (e) of FIG. 10B, when the second attachment component 220 is offset from the first attachment component 120 by +H2, the first magnet 210 is offset from the magnetic field detection device 110 by +(HO+h1), where H2 > H0. It is to be understood that since H2 > H0, the stylus 200 shown in (e) of FIG. 10B is not fixed to the tablet computer 100 through attachment. The stylus 200 shown in (a) of FIG. 10A to (d) of FIG. 10B is fixed to the tablet computer 100 through attachment.

By observing (a) of FIG. 10A to (d) of FIG. 10B, it may be found that the maximum spacing H1 by which the first magnet 210 is offset from the magnetic field detection device 110 is (h1+HO) during the fixation through attachment in the positive direction. Moreover, it may further be found that when the second attachment component 220 is offset from the first attachment component 120 by the maximum spacing H0, the spacing by which the first magnet 210 is offset from the magnetic field detection device 110 may be (H0-h1) or the maximum spacing H1: (h1+HO) during fixation through attachment in the positive direction.

It is to be understood that the spacing by which the first magnet 210 is offset from the magnetic field detection device 110 during fixation through attachment in the positive direction is inversely proportional to the magnetic field intensity generated by the first magnet 210 at the magnetic field detection device 110 during fixation through attachment in the positive direction. When the first magnet 210 is offset from the magnetic field detection device 110 by the maximum spacing H1 during fixation through attachment in the positive direction, the magnetic field intensity B1 generated by the first magnet 210 at the magnetic field detection device 110 is the weakest. It is to be understood that when the stylus 200 is fixed to the tablet computer 100 through attachment, the spacing by which the first magnet 210 is offset from the magnetic field detection device 110 is less than or equal to H1 during fixation through attachment in the positive direction, so that the magnetic field intensity generated at the magnetic field detection device 110 is greater than or equal to B1.

Based on this, when the maximum spacing H1 by which the first magnet 210 during fixation through attachment in the positive direction (or the second magnet 230 during fixation through attachment in the negative direction) is offset from the magnetic field detection device 110 is not the maximum spacing H0 by which the second attachment component 220 is offset from the first attachment component 120, the magnetic field intensity B1 generated by the first magnet 210 (or the second magnetic field 230) at the magnetic field detection device 110 may be used as the preset threshold when the first magnet 210 during fixation through attachment in the positive direction (or the second magnet 230 during fixation through attachment in the negative direction) is offset from the magnetic field detection device 110 by the maximum spacing H1. For the embodiments shown in FIG. 10A and FIG. 10B, the magnetic field intensity B1 generated by the first magnet 210 (or the second magnetic field 230) at the magnetic field detection device 110 may be used as the preset threshold when the first magnet 210 is offset from the magnetic field detection device 110 by the spacing (h1+HO).

It is to be noted that in (e) of FIG. 10B, the first magnet 210 is also offset by the maximum spacing (H0+h1) with respect to the magnetic field detection device 110, so that the first magnet 210 also generates a magnetic field intensity B1 at the magnetic field detection device 110, and the tablet computer 100 determines the situation as a state of being fixed in position through attachment. It may be learned from the foregoing that the stylus 200 shown in (e) of FIG. 10B is not actually fixed to the tablet computer 100 through attachment, which leads to a false positive. However, based on the state shown in (e) of FIG. 10B, the user can perceive that the stylus 200 is not fixed through attachment, and further fix the stylus in position through attachment. Therefore, basically no false positive scenario shown in (e) of FIG. 10B exists. Similarly, when the maximum spacing by which the second magnet 230 is offset from the magnetic field detection device 110 during fixation through attachment in the negative direction is different from the maximum spacing by which the second magnet 230 is offset from the magnetic field detection device 110 during fixation through attachment in the positive direction, a larger spacing may be selected to determine the preset threshold.

Secondly, based on the above concept, the position arrangement among the magnetic field detection device 110, the first attachment component 120, and the second attachment component 220 is described below.

Still referring to FIG. 2, in some embodiments of this application, in order to avoid the problem of error detection caused by the first attachment component 120 triggering the magnetic field detection device 110 to output the first indication information, a first spacing d1 is defined between the first attachment component 120 and the magnetic field detection device 110 in a first direction. The first spacing d1 is used to prevent the first attachment component 120 from affecting the magnetic field at the position of the magnetic field detection device 110.

It is to be noted that, the first attachment component 120 does not affect the magnetic field at the position of the magnetic field detection device 110, which means that the existence or nonexistence of the first attachment component 120 does not cause a change in the magnetic field at the magnetic field detection device 110. In other words, the first attachment component 120 hardly generates a magnetic field at the magnetic field detection device 110.

It may be learned from the foregoing content that the preset threshold is determined based on the magnetic field intensity information outputted by the magnetic field detection device 110 is triggered by only the first magnet 210 or only the second magnet 230. In this case, if the first attachment component 120 generates a magnetic field at the magnetic field detection device 110, the magnetic field required to trigger the magnetic field detection device 110 to output the first indication information is reduced, which is equivalent to lowering the threshold for the magnetic field detection device 110 to be triggered to output the first indication information. In this case, when the stylus 200 is not fixed in position, the magnetic field that triggers the new threshold can be generated, resulting in a false positive. Based on this, by setting the first spacing d1, the first attachment component 120 does not affect the magnetic field at the position of the magnetic field detection device 110, which is beneficial to reducing the false positive rate.

In the specific implementation process, simulation testing may be performed by constantly changing the first spacing d1, and the magnetic field intensity of the position of the magnetic field detection device 110 may be detected until the magnetic field intensity of the position of the magnetic field detection device 110 does not change.

Similarly, a second spacing d2 exists between the first magnet 210 and the second attachment component 220 in a second direction, and the second spacing d2 is used to prevent the second attachment component 220 from affecting the magnetic field at the position of the magnetic field detection device 110 when the stylus 200 is fixed through attachment in the positive direction. A third spacing d3 exists between the second magnet 230 and the second attachment component 220 in the second direction, and the third spacing d3 is used to prevent the second attachment component 220 from affecting the magnetic field at the position of the magnetic field detection device 110 when the stylus 200 is fixed through attachment in the negative direction. The setting effect and specific implementation of the second spacing d2 and the third spacing d3 are similar to the setting of the first spacing d1, and the details are not described herein again.

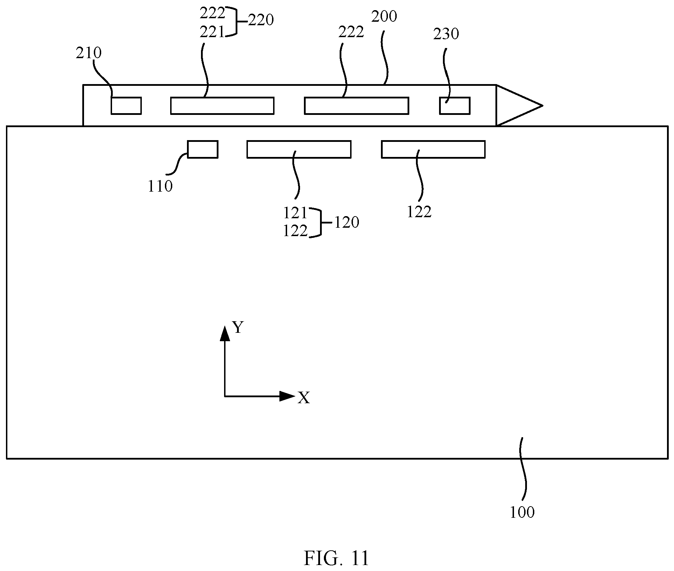

It is to be noted that, the setting of the second spacing d2 and the third spacing d3 means that as long as the stylus 200 is fixed through attachment, the second attachment component 220 does not affect the magnetic field at the position of the magnetic field detection device 110. That is to say, when the second attachment component 220 affects the magnetic field at the position of the magnetic field detection device 110, the stylus 200 is no longer fixed through attachment. Based on this, as shown in FIG. 11, FIG. 11 is a diagram of a possible accidental trigger scenario of the accessory detection system shown in FIG. 2. In the figure, the second attachment component 220 may trigger the magnetic field detection device 110 to output the first indication information, but because the stylus 200 is no longer fixed through attachment, the user can perceive that the stylus 200 is not fixed through attachment, and the stylus is to be further fixed in position through attachment. Therefore, basically no accidental trigger scenario shown in FIG. 11 exists. In another embodiment, if the first attachment component 120 and the second attachment component 220 adopt the Halbach Array, then when the scenario in FIG. 11 appears, the first attachment component 120 and the second attachment component 220 repel each other, so that the stylus 200 is far away from the tablet computer 100; or the first attachment component 120 and the second attachment component 220 are close to each other, so that the stylus 200 is fixed to the tablet computer 100 through attachment.

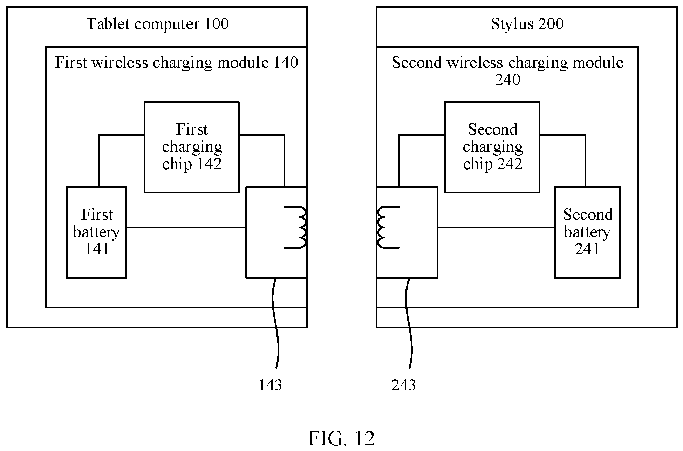

It is to be understood that the purpose of detecting the attachment state of the stylus 200 by the tablet computer 100 is to further expand the functions of the tablet computer 100, for example, an anti-loss function of reminding the user to fix the stylus 200 in position through attachment in time by detecting whether the stylus 200 is attached in position in real time. In some embodiments, the purpose of detecting the attachment condition of the stylus 200 by the tablet computer 100 is to charge the stylus. Based on this, this embodiment provides a schematic diagram of an architecture of an accessory detection system shown in FIG. 12.

Referring to FIG. 12, a tablet computer 100 further includes a first wireless charging module 140. The first wireless charging module 140 includes a first battery 141, a first charging chip 142, and a first charging structure 143. The first charging structure 143 is a wireless charging coil. The first charging chip 142 is electrically connected to the first battery 141 and the first charging structure 143 respectively. The first charging structure 143 is electrically connected to the first battery 141.

The stylus 200 further includes a second wireless charging module 240. The second wireless charging module 240 includes a second battery 241, a second charging chip 242, and a second charging structure 243. The second charging structure 243 is a wireless charging coil. The second charging chip 242 is electrically connected to the second battery 241 and the second charging structure 243 respectively. The second charging structure 243 is electrically connected to the second battery 241.

The first battery 141 of the tablet computer 100 may be used as a power supply to charge the second battery 241. In another embodiment, the first battery 141 may further supply power to another module in the tablet computer 100. The second battery 241 may supply power to another module in the stylus 200.

The first charging chip 142 is configured to control the first charging structure 143 to output a current when the stylus 200 is fixed in position through attachment in a positive direction or a negative direction. The second charging chip 242 is configured to receive the current through the second charging structure 243 to charge the second battery 241 of the stylus 200 when the stylus 200 is fixed in position through attachment in the positive direction or the negative direction.

In addition, the first charging structure 143 and the second charging structure 243 not only can transmit the current to realize charging under the control of the first charging chip 142 and the second charging chip 242, but also can transmit electrical signals to each other to realize information exchange.

In order to realize the charging of the tablet computer 100 to the stylus 200 by using the first charging structure 143 and the second charging structure 243, this embodiment of this application further provides an accessory detection system shown in FIG. 13 based on FIG. 2. The position arrangement of the first charging structure 143 and the second charging structure 243 is described below with reference to FIG. 13.

Referring to FIG. 13, the tablet computer 100 is provided with the first charging structure 143. The second charging structure 243 is arranged in the stylus 200. It is to be understood that the first charging structure 143 and the second charging structure 243 can realize signal transmission only when opposite to each other, thereby realizing the charging function. Based on this, the first charging structure 143 and the second charging structure 243 are opposite to each other when the stylus 200 is fixed in position through attachment in the positive direction shown in (a) of FIG. 13 and is fixed through attachment in the negative direction shown in (b) of FIG. 13.

In order that the first charging structure 143 is opposite to the second charging structure 243 regardless of whether the stylus 200 is fixed through attachment in the positive direction or the negative direction, the accessory detection system shown in FIG. 13 is provided with the first charging structure 143 and the second charging structure 243 according to the following embodiment.

Still referring to FIG. 13, the first charging structure 143 is symmetrically arranged with respect to a center line O6 of the first attachment component 120. The second charging structure 243 is symmetrically arranged with respect to a center line O5 of the second attachment component 220. It is to be understood that for the structure shown in FIG. 13, the center line O6 of the first attachment component 120 is an axis of symmetry of a first attachment member 121 and a second attachment member 122. The center line O5 of the second attachment component 220 is an axis of symmetry of a third attachment member 221 and a fourth attachment member 222. In other words, in the accessory detection system shown in FIG. 13, the second charging structure 243 is arranged at the center line O5 of the second attachment component 220, and the first charging structure 143 is arranged at the center line O6 of the first attachment component 120. In addition, when the stylus 200 is fixed to the tablet computer 100 through attachment in the positive direction or the negative direction, a spacing by which the first attachment component 120 is offset from the second attachment component 220 in a direction of an X axis is less than half of the first charging structure 143 in the direction of the X axis and less than half of the second charging structure 243 in the direction of the X axis.

It is to be understood that when the second charging structure 243 is arranged at the center line O5 of the second attachment component 220 and the first charging structure 143 is arranged at the center line O6 of the first attachment component 120, whether the second charging structure 243 and the first charging structure 143 are opposite when the stylus 200 is fixed through attachment in the forward or negative direction depends on a maximum spacing H0 by which the first attachment component 120 is offset from the second attachment component 220. In this embodiment, the maximum spacing H0 is less than half of the first charging structure 143 in the direction of the X axis and less than half of the second charging structure 243 in the direction of the X axis. Based on this, the second charging structure 243 located at the center line O5 of the second attachment component 220 is opposite to the first charging structure 143 located at the center line O6 of the first attachment component 120, so that the charging function can be realized by performing interaction.

It is to be noted that, the second charging structure 243 is opposite to the first charging structure 143 when the stylus 200 is fixed in position through attachment, which does not mean that the second charging structure exactly faces the first charging structure (that is, the center lines coincide), but that at least parts of areas of the second charging structure and the first charging structure that overlap exist in a direction of a Y axis. In other words, the second charging structure 243 can also maintain a relative positional relationship when being offset from the first charging structure 143 by a specific spacing when the stylus 200 is fixed in position through attachment. It is to be understood that a smaller spacing by which the second charging structure 243 is offset from the first charging structure 143 when the stylus 200 is fixed in position through attachment leads to higher charging efficiency. When the second charging structure 243 exactly faces the first charging structure 143 when the stylus 200 is fixed through attachment, the charging efficiency reaches the highest. In addition, the spacing by which the second charging structure 243 is offset from the first charging structure 143 when the stylus 200 is fixed in position through attachment depends on the maximum spacing H0 by which the second attachment component 220 is offset from the first attachment component 120 when fixed through attachment. Therefore, in the specific implementation process, the charging efficiency may be used as a reference factor for designing the maximum spacing H0 for offset.

The first charging structure 143 and the second charging structure 243 in FIG. 12 and FIG. 13 are wireless charging coils. It is to be understood that a center line of the wireless charging coil is a center line in a length direction of the coil. It is to be noted that, the first charging structure 143 and the second charging structure 243 being wireless charging coils are described in both FIG. 12 and FIG. 13. In another embodiment, the second charging structure 243 may also be a conductive column extending in a radial direction of the stylus 200 and having exposed metal contacts, and correspondingly, the first charging structure 143 is also a conductive column extending through a thickness direction of an attachment side and having metal contacts exposed at the attachment side. The conductive column can realize current transmission through abutment of the metal contacts, thereby realizing the charging function. It is to be understood that a center line of the conductive column is a center line in a height direction of the conductive column.

It is to be understood that in the accessory detection system shown in FIG. 12 and FIG. 13, since the first charging structure 143 and the second charging structure 243 are opposite when the stylus 200 is fixed in position through attachment, the charging function can only be realized through the interaction between the first charging structure 143 and the second charging structure 243 when being opposite. Based on this, before charging, it may be determined through the following embodiment whether the stylus 200 is fixed in position through attachment.

In some embodiments, when the processor 150 outputs the first indication information, it is determined that the stylus 200 is fixed in position through attachment. When the processor 150 outputs the second indication information, it is determined that the stylus 200 is not fixed in position through attachment.

It is to be understood that the processor 150 of the tablet computer 100 may determine the attachment state of the stylus 200. In this case, in order to further enable the charging function, the processor 150 of the tablet computer 100 needs to send a charging instruction to the first wireless charging module 140 after determining that the stylus 200 is fixed in position through attachment, so as to inform the first wireless charging module that the stylus 200 is fixed in position through attachment and start charging. Certainly, the first charging chip 142 may also determine the attachment state of the stylus 200. In this case, the first charging chip 142 can enable the charging function after determining that the stylus 200 is fixed in position through attachment. This is not specifically limited in this embodiment of this application.

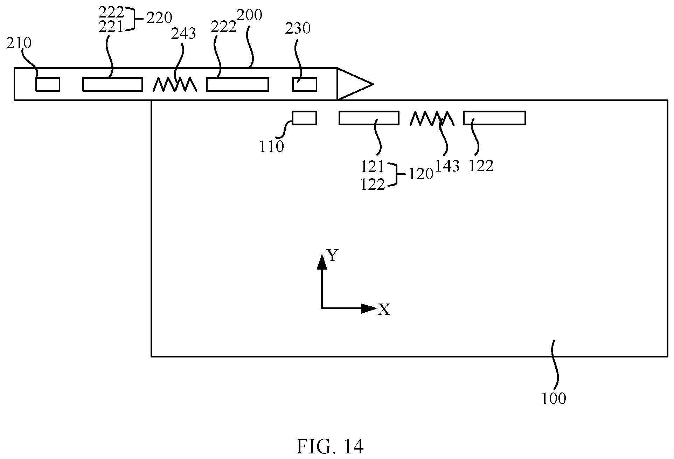

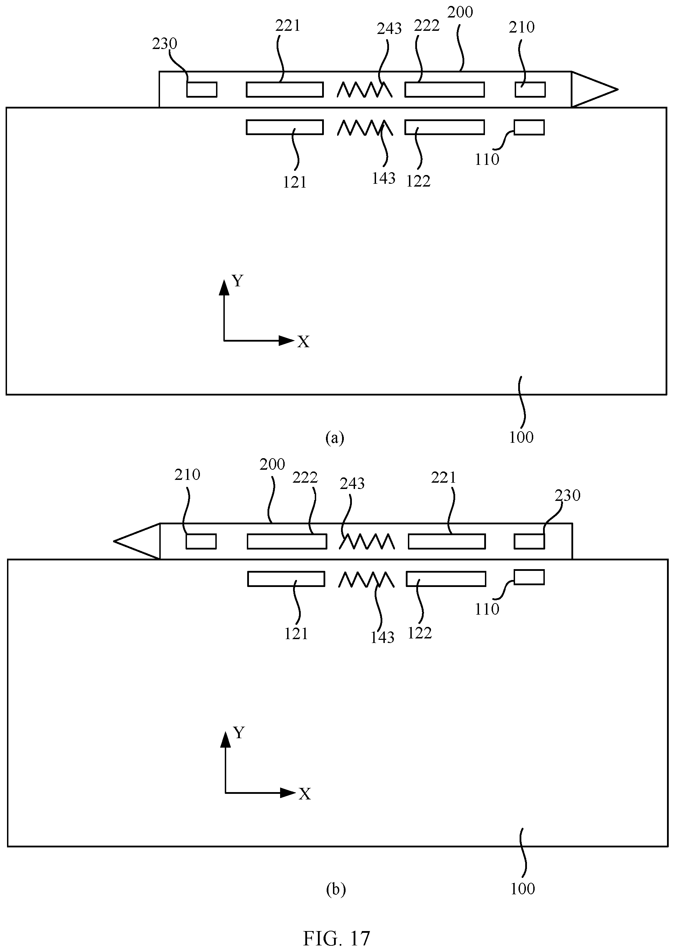

Referring to FIG. 14, FIG. 14 is a diagram of a possible placing scenario of the accessory detection system shown in FIG. 13. It can be seen from FIG. 14 that when the stylus 200 is placed in a positive direction, so that the fourth attachment member 222 is opposite to the magnetic field detection device 110, the processor may also be triggered to output the first indication information. In this case, a false positive may exist in the above solution of determining the attachment state of the stylus 200 only based on the indication information of the processor. Based on the situation, this embodiment of this application further provides an embodiment shown in FIG. 17.

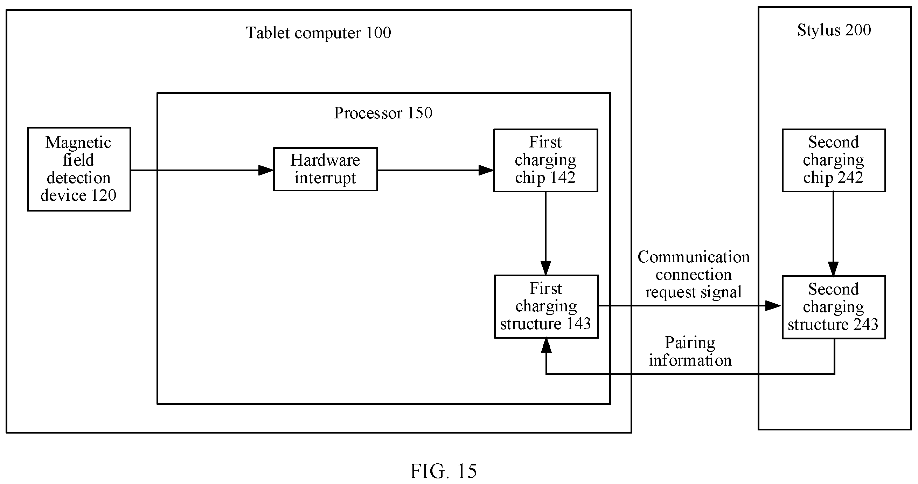

Referring to FIG. 15, FIG. 15 is a schematic diagram of an architecture of a communication connection established between a tablet computer 100 and a stylus 200 in the accessory detection system shown in FIG. 13. The processor 150 controls the first charging chip 142 to output a communication connection request signal through the first charging structure 143 after triggering a software interrupt and outputting the first indication information. The communication connection request signal is used for enabling the stylus 200 to output pairing information.

The second charging chip 242 receives the communication connection request signal through the second charging structure 243 and parses the communication connection request signal. After the second charging chip 242 parses the received communication connection request signal and determines that the signal is a command to establish a communication connection (also referred to as handshake communication), the second charging chip 242 controls the second charging structure 243 to send pairing information to establish the handshake communication. In another embodiment, a processor may also be arranged in the stylus 200 to parse the received communication connection request signal and control the second charging chip 242 to send the pairing information through the second charging structure 243, so as to establish the handshake communication.

The first charging chip 142 receives the pairing information through the first charging structure 143.

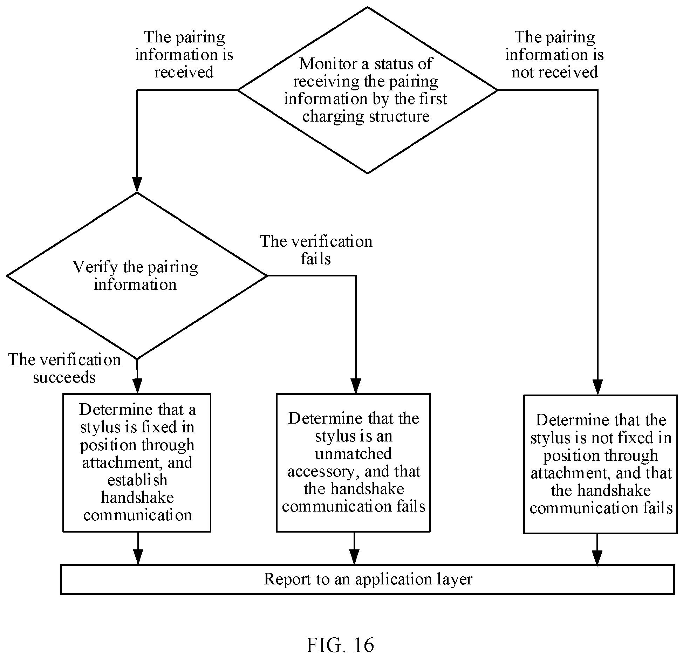

Referring to FIG. 16, FIG. 16 is a flowchart of establishing a communication connection by a processor in FIG. 15. It may be understood that in the process of establishing the communication connection, if the stylus 200 is not fixed in position through attachment, the first charging structure 143 is not opposite to the second charging structure 243, and the second charging structure 243 cannot receive the communication connection request signal sent by the first charging structure 143, and naturally the first charging structure 143 cannot receive the pairing information fed back by the second charging structure 243 based on the communication connection request signal. If the stylus 200 is fixed in position through attachment, the first charging structure 143 is opposite to the second charging structure 243, and the second charging structure 243 can receive the communication connection request signal sent by the first charging structure 143, and naturally the first charging structure 143 will also receive the pairing information fed back by the second charging structure 243 based on the communication connection request signal.

Based on this, in this embodiment, by monitoring a status of receiving the pairing information by the first charging structure 143, when the first charging structure 143 does not receive the pairing information, the processor 150 determines that the stylus 200 is not fixed in position through attachment at this time, and the establishment of the handshake communication fails. When the first charging structure 143 receives the pairing information, the processor 150 verifies the pairing information. When verification of the pairing information succeeds, the processor 150 determines that the stylus 200 is fixed in position through attachment and the establishment of the handshake communication succeeds. When verification of the pairing information fails, the processor 150 determines that the stylus 200 is an unmatched accessory, and the establishment of the handshake communication fails.

In some embodiments, when the processor 150 determines that the stylus 200 is fixed in position through attachment and that the handshake communication is successfully established, the processor 150 may report to an application layer to remind the user that the stylus 200 is fixed in position through attachment and whether charging is needed. For example, when the tablet computer 100 and the stylus 200 successfully establish handshake communication, the processor 150 may output pairing success prompt information, which is used to indicate that the stylus 200 is fixed in position through attachment and that the handshake communication is successfully established, and may further remind the user whether charging is needed. The pairing success prompt information may be pop-up box information, or the like. When the user taps an option of charging, the processor 150 sends a charging instruction to the first charging chip 142 to notify the first charging chip of start of charging. In another embodiment, when the tablet computer 100 successfully establishes the handshake communication with the stylus 200, the processor 150 may also directly send a charging instruction to the first charging chip 142 to notify the first charging chip of the start of charging. However, when the handshake communication fails, the processor 150 confirms that the software interrupt is an invalid interrupt signal, and in this case, the processor 150 may report to the application layer to remind the user that the stylus 200 is not fixed in position through attachment or that the stylus 200 is an unmatched accessory.

It can be seen that in the implementation shown in FIG. 16, in addition to first-level determination based on the indication information, second-level determination is realized by using the communication connection, which effectively solves the accidental trigger scenario shown in FIG. 14.

It may be learned from the above that the first wireless charging module 140 needs to be triggered by a software interrupt before operation. Based on this, in order to reduce power consumption, in some embodiments, the first wireless charging module 140 is configured to switch to an operating state when the processor 150 outputs a software interrupt; and when the processor 150 does not output a software interrupt, switch to a low power consumption state. The operating state herein is a state that the first wireless charging module 140 is powered on and all components can operate normally. In the operating state, the first wireless charging module 140 may perform the actions of verifying the pairing information, determining the attachment condition of the stylus 200, and charging. The low power consumption state herein may mean that the first wireless charging module 140 is powered on, but all components are in a dormant state. In the operating state, the components of the first wireless charging module 140 have low power consumption.

It is to be noted that, although the process of verifying the pairing information and determining the attachment condition of the stylus 200 in FIG. 16 is performed by the processor 150, in another embodiment, the process may also be performed by the first wireless charging module 140 (specifically, the first charging chip 142). In this case, when it is determined that the stylus 200 is fixed in position through attachment, charging is directly started through the first charging structure 143, which is not specifically limited in this embodiment of this application.

It is to be noted that, the added charging function is described in FIG. 13 by using the accessory detection system shown in FIG. 2 as an example. In another embodiment, a charging function may also be added to the accessory detection system shown in (a) or (b) of FIG. 3. For the specific implementation, reference may be made to FIG. 13, and the details are not described herein again. It is to be understood that when the charging function is added based on the accessory detection system shown in (a) or (b) of FIG. 3, hole locations need to be reserved at positions of the center lines of the first attachment component 120 and the second attachment component 220 to avoid the first charging structure 140 and the second charging structure 240.

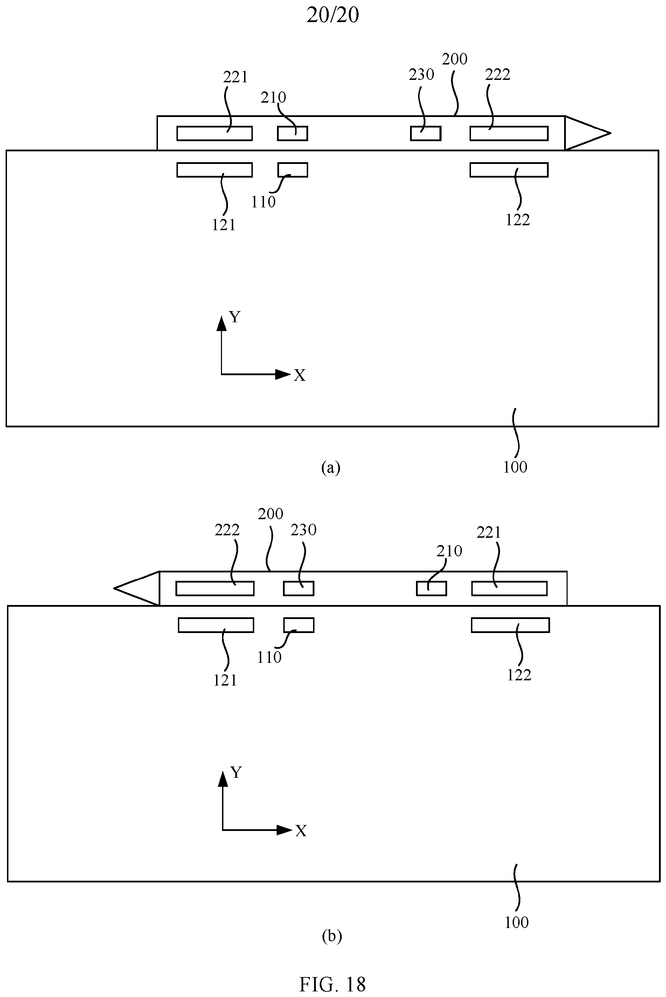

In addition, in FIG. 2 and FIG. 13, the first magnet 210, the third attachment member 221, the fourth attachment member 222, and the second magnet 230 are arranged side by side in sequence in a positive direction of the X axis, that is, the third attachment member 221 and the fourth attachment member 222 are located between the first magnet 210 and the second magnet 230. The magnetic field detection device 110, the first attachment member 121, and the second attachment member 122 are arranged side by side in sequence in the positive direction of the X axis. However, in another embodiment, the arrangement order of the first magnet 210, the third attachment member 221, the fourth attachment member 222, and the second magnet 230 in the positive direction of the X axis may be exchanged, and the first attachment member 121 and the second attachment member 122 that are attached in cooperation with the third attachment member 221 and the fourth attachment member 222, and the magnetic field detection device 110 matching the first magnet 210 and the second magnet 230 also need to be correspondingly transposed. For example, based on FIG. 13, (a) and (b) of FIG. 17 show an example in which the first attachment member 121, the second attachment member 122, and the magnetic field detection device 110 are arranged side by side in sequence in the positive direction of the X axis, and the second magnet 230, the third attachment member 221, the fourth attachment member 222, and the first magnet 210 are arranged side by side in sequence in the positive direction of the X axis. For example, based on FIG. 2, (a) and (b) of FIG. 18 show an example in which the first magnet 210 and the second magnet 230 are located between the third attachment member 221 and the fourth attachment member 222, and the magnetic field detection device 110 is located between the first attachment member 121 and the second attachment member 122.

Moreover, the electronic device 100 is a tablet computer 100 and the to-be-attached accessory 200 is a stylus 200 by way of example for description in the above embodiments. It is to be understood that in another embodiment, the electronic device 100 and the to-be-attached accessory 200 may further be in another product form, which is not specifically limited in this embodiment of this application. For example, when the electronic device 100 is a tablet computer 100, the to-be-attached accessory 200 may further be an accessory such as a wireless microphone and a wearable device (such as a watch). For example, the electronic device 100 may also be an electronic whiteboard, and the to-be-attached accessory 200 may be a laser pointer that matches the electronic whiteboard and may be attached to the electronic whiteboard. By detecting whether the to-be-attached accessory is attached in position and then performing a charging operation on the to-be-attached accessory, or just detecting whether the to-be-attached accessory is attached in position, the user can be prompted to place the to-be-attached accessory back to a fixed position immediately to avoid loss. For example, the electronic device 100 may be a bedside table having a wireless charging function, and the to-be-attached accessory 200 may be a mobile phone that can be attached to a charging plane of the bedside table to be charged. Then a charging operation is performed on the to-be-attached accessory by detecting whether the to-be-attached accessory is attached in position. For example, the electronic device 100 may be a water dispenser configured to perform coupled heating through a wireless coil, and the to-be-attached accessory 200 may be a kettle, a water cup, and the like that can be attached to a heating plate of the water dispenser and heated. By detecting whether the kettle or the water cup is attached in position, then a water adding operation is performed on the kettle or the water cup. It is to be understood that for the stylus 200, the first orientation and the second orientation are two orientations that differ by 180 degrees, but when the to-be-attached accessory 200 is a watch, the first orientation and the second orientation may be two orientations that differ by another angle (such as 90 degrees). In this case, the first magnet 210, the second attachment component 220, and the second magnet 230 are not arranged side by side in one direction, and the magnetic field detection device 110 and the first attachment component 120 are not arranged side by side in one direction, but have a rotation angle of 90 degrees. For other contents, reference may be made to the implementation, and the details are not described herein again.

The foregoing content is merely specific implementations of this application, but is not intended to limit the protection scope of this application. Any variation or replacement within the technical scope disclosed in this application shall fall within the protection scope of this application. Therefore, the protection scope of this application shall be subject to the protection scope of the claims.

## Claims

1. An accessory detection system, comprising:
a tablet computer (100), comprising a first attachment component (120), a magnetic field detection device (110), and a first charging structure (143); wherein the first attachment component (120) includes a first attachment member (121) and a second attachment member (122) that are spaced apart in a first direction; the magnetic field detection device and the first charging structure are both located between the first attachment member (121) and the second attachment member (122) and the magnetic field detection device is configured to obtain magnetic field intensity information;
a stylus (200), comprising a second attachment component (220), a first magnet (210), a second magnet (230), and a second charging structure (243); wherein the second attachment component (220) includes a third attachment member (221) and a fourth attachment member (222) that are spaced apart in a second direction; the first magnet (210) and the second magnet (230) are both located between the third attachment member (221) and the fourth attachment member, and the second charging structure (243) is located between the first magnet (210) and the second magnet (230);
wherein the second attachment component (220) is capable to be attached to the first attachment component (120), so that the stylus (200) is capable to be fixed to the tablet computer (100) through attachment in a first orientation or a second orientation; and the first magnet (210) is opposite to the magnetic field detection device when the stylus (200) is fixed to the tablet computer (100) through attachment in the first orientation; and the second magnet (230) is opposite to the magnetic field detection device when the stylus (200) is fixed to the tablet computer (100) through attachment in the second orientation; and the first charging structure is opposite to the second charging structure (243) when the stylus (200) is fixed to the tablet computer (100) through attachment in the first orientation or the second orientation;
wherein the first orientation is opposite to the second orientation, and the first attachment component (120) and the second attachment component (220) are Halbach Arrays.

2. The system according to claim 1, wherein the magnetic field detection device is configured to output a first indication information when the magnetic field intensity information is greater than a preset threshold.

3. The system according to claim 2, wherein the magnetic field detection device is further configured to output second indication information when the magnetic field intensity information is less than the preset threshold.

4. The system according to claim 2 or 3, wherein the first magnet (210) is configured to trigger the magnetic field detection device to output first indication information when the stylus (200) is fixed to the tablet computer (100) through attachment in the first orientation, and the second magnet (230) is configured to trigger the magnetic field detection device to output the first indication information when the stylus (200) is fixed to the tablet computer (100) through attachment in the second orientation.

5. The system according to any one of claims 1-4, wherein the magnetic field detection device and the first attachment component (120) are arranged side by side in the first direction, and the first direction is perpendicular to a thickness direction of the tablet computer (100); and
the first magnet (210), the second attachment component (220), and the second magnet (230) are arranged side by side in the second direction.

6. The system according to any one of claims 1-5, wherein the first charging structure is symmetrically arranged with respect to a center line (O6) of the first attachment component (120).
and the second charging structure (243) is symmetrically arranged with respect to a center line (O5) of the second attachment component (220).

7. The system according to any one of claims 1-6, wherein the first magnet (210) and the second magnet (230) are symmetrically arranged with respect to a center line (O5) of the second attachment component (220); and
when the stylus (200) is fixed to the tablet computer (100) through attachment in the first orientation and the first attachment component (120) exactly faces the second attachment component (220), the first magnet (210) exactly faces the magnetic field detection device.

8. The system according to any one of claims 1-7, wherein the stylus (200) is fixed to the tablet computer (100) in the first orientation when the first attachment member (121) is attached to the third attachment member, and the second attachment member (122) is attached to the fourth attachment member; and the stylus (200) is fixed to the tablet computer (100) in the second orientation when the first attachment member (121) is attached to the fourth attachment member, and the second attachment member (122) is attached to the third attachment member.

9. The system according to any one of claims 1-8, wherein a spacing (h) by which the first attachment component (120) is offset from the second attachment component (220) in the second direction is less than half of the first charging structure in the first direction and less than half of the second charging structure (243) in the second direction when the stylus (200) is fixed to the tablet computer (100) through attachment.

10. The system according to any one of claims 1-9, wherein the tablet computer (100) is configured to determine that the stylus (200) is fixed in position through attachment based on the first indication information.

11. The system according to any one of claims 1-10, wherein the tablet computer (100) comprises a first wireless charging module (140), the first wireless charging module (140) comprises a first charging chip (142) and the first charging structure, the stylus (200) comprises a second wireless charging module (240), the second wireless charging module (240) comprises a second charging chip (242) and the second charging structure (243), the first charging chip (142) is configured to control the first charging structure to output a current when the stylus (200) is fixed in position through attachment, and the second charging chip is configured to receive a current through the second charging structure (243) to charge the stylus (200) when the stylus (200) is fixed in position through attachment.

12. The system according to claim 11, wherein the first charging chip (142) is further configured to control the first charging structure to output a communication connection request signal after the tablet computer (100) receives the first indication information and before the tablet computer (100) determines that the stylus (200) is fixed in position through attachment, and the communication connection request signal is used to enable the stylus (200) to output pairing information;
the first charging chip (142) is further configured to receive the pairing information through the first charging structure, when the first charging structure receives the pairing information and the pairing information is verified successfully, the stylus (200) is fixed in position through attachment, and when the first charging structure does not receive the pairing information, the stylus (200) is not fixed in position through attachment; and
the second charging chip is further configured to receive the communication connection request signal through the second charging structure (243), and control the second charging structure (243) to output the pairing information after receiving the communication connection request signal.

13. The system according to claim 11 or 12, wherein the first wireless charging module (140) is further configured to switch to an operating state when the tablet computer (100) receives the first indication information; and
the first wireless charging module (140) is further configured to switch to a low power consumption state when the tablet computer (100) does not receive the first indication information.

14. The system according to any one of claims 1-13, wherein a first spacing (d1) exists between the first attachment component (120) and the magnetic field detection device in the first direction; and
the first spacing (d1) is used to prevent the first attachment component (120) from affecting the magnetic field at the position of the magnetic field detection device.

15. The system according to any one of claims 1-14, wherein a second spacing (d2) exists between the first magnet (210) and the second attachment component (220) in the second direction, and the second spacing (d2) is used to prevent the second attachment component (220) from affecting the magnetic field at the position of the magnetic field detection device when the stylus (200) is fixed through attachment in the first orientation; and
a third spacing (d3) exists between the second magnet (230) and the second attachment component (220) in the second direction, and the third spacing (d3) is used to prevent the second attachment component (220) from affecting the magnetic field at the position of the magnetic field detection device when the stylus (200) is fixed through attachment in the second orientation.

## Patentansprüche

1. Ein Zubehörerkennungssystem, umfassend:
einen Tablet-Computer (100), umfassend eine erste Befestigungskomponente (120), eine Magnetfeld-Erkennungsvorrichtung (110) und eine erste Ladeeinrichtung (143); wobei die erste Befestigungskomponente (120) ein erstes Befestigungselement (121) und ein zweites Befestigungselement (122) umfasst, die in einer ersten Richtung voneinander beabstandet sind; die Magnetfeld-Erkennungsvorrichtung und die erste Ladeeinrichtung liegen beide zwischen dem ersten Befestigungselement (121) und dem zweiten Befestigungselement (122), und die Magnetfeld-Erkennungsvorrichtung ist dazu eingerichtet, Magnetfeldstärkeinformationen zu erfassen;
einen Eingabestift (200), umfassend eine zweite Befestigungskomponente (220), einen ersten Magneten (210), einen zweiten Magneten (230) und eine zweite Ladeeinrichtung (243); wobei die zweite Befestigungskomponente (220) ein drittes Befestigungselement (221) und ein viertes Befestigungselement (222) umfasst, die in einer zweiten Richtung voneinander beabstandet sind; der erste Magnet (210) und der zweite Magnet (230) befinden sich beide zwischen dem dritten Befestigungselement (221) und dem vierten Befestigungselement, und die zweite Ladeeinrichtung (243) befindet sich zwischen dem ersten Magneten (210) und dem zweiten Magneten (230);
wobei die zweite Befestigungskomponente (220) an der ersten Befestigungskomponente (120) angebracht werden kann, so dass der Eingabestift (200) mittels Befestigung in einer ersten oder zweiten Ausrichtung am Tablet-Computer (100) fixiert werden kann; und der erste Magnet (210) liegt der Magnetfeld-Erkennungsvorrichtung gegenüber, wenn der Eingabestift (200) durch Befestigung in der ersten Ausrichtung am Tablet-Computer (100) fixiert ist; und der zweite Magnet (230) liegt der Magnetfeld-Erkennungsvorrichtung gegenüber, wenn der Eingabestift (200) durch Befestigung in der zweiten Ausrichtung am Tablet-Computer (100) fixiert ist; und die erste Ladeeinrichtung liegt der zweiten Ladeeinrichtung (243) gegenüber, wenn der Eingabestift (200) durch Befestigung in der ersten oder zweiten Ausrichtung am Tablet-Computer (100) fixiert ist;
wobei die erste Ausrichtung entgegengesetzt zur zweiten Ausrichtung ist und die erste Befestigungskomponente (120) sowie die zweite Befestigungskomponente (220) Halbach-Arrays sind.

2. System gemäß Anspruch 1, wobei die Magnetfeld-Erkennungsvorrichtung dazu eingerichtet ist, eine erste Anzeigeinformation auszugeben, wenn die Magnetfeldstärkeinformation größer als ein vorbestimmter Schwellenwert ist.

3. System gemäß Anspruch 2, wobei die Magnetfeld-Erkennungsvorrichtung ferner dazu eingerichtet ist, eine zweite Anzeigeinformation auszugeben, wenn die Magnetfeldstärkeinformation kleiner als der vorbestimmte Schwellenwert ist.

4. System gemäß Anspruch 2 oder 3, wobei der erste Magnet (210) so konfiguriert ist, dass er das Magnetfeld-Erkennungsgerät auslöst, um erste Anzeigeinformationen auszugeben, wenn der Stift (200) durch Befestigung in der ersten Ausrichtung am Tablet-Computer (100) fixiert wird, und der zweite Magnet (230) so konfiguriert ist, das Magnetfeld-Erkennungsgerät auszulösen, um erste Anzeigeinformationen auszugeben, wenn der Stift (200) durch Befestigung in der zweiten Ausrichtung am Tablet-Computer (100) fixiert wird.

5. System gemäß einem der Ansprüche 1-4, wobei das Magnetfeld-Erkennungsgerät und die erste Befestigungskomponente (120) nebeneinander in der ersten Richtung angeordnet sind und die erste Richtung senkrecht zur Dicke des Tablet-Computers (100) verläuft; und
die erste Magnet (210), die zweite Befestigungskomponente (220) und der zweite Magnet (230) sind nebeneinander in der zweiten Richtung angeordnet.

6. System gemäß einem der Ansprüche 1-5, wobei die erste Ladeeinrichtung symmetrisch bez üglich einer Mittellinie (O6) der ersten Befestigungskomponente (120) angeordnet ist.
und die zweite Ladeeinrichtung (243) symmetrisch bezüglich einer Mittellinie (O5) der zweiten Befestigungskomponente (220) angeordnet ist.

7. System gemäß einem der Ansprüche 1-6, wobei der erste Magnet (210) und der zweite Magnet (230) symmetrisch bezüglich einer Mittellinie (O5) der zweiten Befestigungskomponente (220) angeordnet sind; und
wenn der Stift (200) durch Befestigung in der ersten Ausrichtung am Tablet-Computer (100) fixiert ist und die erste Befestigungskomponente (120) genau der zweiten Befestigungskomponente (220) gegenübersteht, steht der erste Magnet (210) genau dem Magnetfeld-Erkennungsgerät gegenüber.

8. System gemäß einem der Ansprüche 1-7, wobei der Stift (200) in der ersten Ausrichtung am Tablet-Computer (100) befestigt ist, wenn das erste Befestigungselement (121) am dritten Befestigungselement angebracht ist und das zweite Befestigungselement (122) am vierten Befestigungselement angebracht ist; und der Stift (200) in der zweiten Ausrichtung am Tablet-Computer (100) befestigt ist, wenn das erste Befestigungselement (121) am vierten Befestigungselement und das zweite Befestigungselement (122) am dritten Befestigungselement angebracht ist.

9. System gemäß einem der Ansprüche 1-8, wobei ein Abstand (h), um den die erste Befestigungskomponente (120) von der zweiten Befestigungskomponente (220) in der zweiten Richtung versetzt ist, kleiner als die Hälfte der ersten Ladeeinrichtung in der ersten Richtung und kleiner als die Hälfte der zweiten Ladeeinrichtung (243) in der zweiten Richtung ist, wenn der Stift (200) durch Befestigung am Tablet-Computer (100) fixiert ist.

10. Das System gemäß einem der Ansprüche 1-9, wobei der Tablet-Computer (100) so konfiguriert ist, dass er anhand der ersten Anzeigeinformation bestimmt, dass der Eingabestift (200) mittels Befestigung in Position gehalten ist.

11. Das System gemäß einem der Ansprüche 1-10, wobei der Tablet-Computer (100) ein erstes kabelloses Lade-modul (140) umfasst, das erste kabellose Lademodul (140) einen ersten Ladechip (142) und die erste Ladestruktur umfasst, der Eingabestift (200) ein zweites kabelloses Lademodul (240) umfasst, das zweite kabellose Lademodul (240) einen zweiten Ladechip (242) und die zweite Ladestruktur (243) umfasst, der erste Ladechip (142) so konfiguriert ist, dass er die erste Ladestruktur steuert, um einen Strom auszugeben, wenn der Eingabestift (200) mittels Befestigung in Position gehalten ist, und der zweite Ladechip so konfiguriert ist, dass er einen Strom über die zweite Ladestruktur (243) empfängt, um den Eingabestift (200) zu laden, wenn dieser mittels Befestigung in Position gehalten ist.

12. Das System gemäß Anspruch 11, wobei der erste Ladechip (142) ferner konfiguriert ist, die erste Ladestruktur zu steuern, um ein Kommunikationsverbindungsanfragesignal auszugeben, nachdem der Tablet-Computer (100) die erste Anzeigeinformation empfangen hat und bevor der Tablet-Computer (100) bestimmt, dass der Eingabestift (200) mittels Befestigung in Position gehalten ist, und wobei das Kommunikationsverbindungsanfragesignal verwendet wird, um den Eingabestift (200) dazu zu befähigen, Kopplungsinformationen auszugeben;
der erste Ladechip (142) ist ferner konfiguriert, die Kopplungsinformationen über die erste Ladestruktur zu empfangen; wenn die erste Ladestruktur die Kopplungsinformationen empfängt und diese erfolgreich verifiziert werden, wird der Eingabestift (200) mittels Befestigung in Position gehalten; und wenn die erste Ladestruktur die Kopplungsinformationen nicht empfängt, wird der Eingabestift (200) nicht mittels Befestigung in Position gehalten; und
der zweite Ladechip ist ferner konfiguriert, das Kommunikationsverbindungsanfragesignal über die zweite Ladestruktur (243) zu empfangen und die zweite Ladestruktur (243) so zu steuern, dass nach Empfang des Kommunikationsverbindungsanfragesignals die Kopplungsinformationen ausgegeben werden.

13. Das System gemäß Anspruch 11 oder 12, wobei das erste kabellose Lademodul (140) ferner konfiguriert ist, in einen Betriebszustand zu schalten, wenn der Tablet-Computer (100) die erste Anzeigeinformation empfängt; und
das erste kabellose Lademodul (140) ferner konfiguriert ist, in einen Zustand mit niedrigem Energieverbrauch zu schalten, wenn der Tablet-Computer (100) die erste Anzeigeinformation nicht empfängt.

14. System gemäß einem der Ansprüche 1-13, wobei ein erster Abstand (d1) zwischen der ersten Befestigungskomponente (120) und der Magnetfeld-Erkennungseinrichtung in der ersten Richtung besteht; und
der erste Abstand (d1) dazu dient, zu verhindern, dass die erste Befestigungskomponente (120) das Magnetfeld an der Position der Magnetfeld-Erkennungseinrichtung beeinflusst.

15. System gemäß einem der Ansprüche 1-14, wobei ein zweiter Abstand (d2) zwischen dem ersten Magneten (210) und der zweiten Befestigungskomponente (220) in der zweiten Richtung besteht, und der zweite Abstand (d2) dazu dient, zu verhindern, dass die zweite Befestigungskomponente (220) das Magnetfeld an der Position der Magnetfeld-Erkennungseinrichtung beeinflusst, wenn der Eingabestift (200) in der ersten Ausrichtung durch Befestigung fixiert ist; und
ein dritter Abstand (d3) zwischen dem zweiten Magneten (230) und der zweiten Befestigungskomponente (220) in der zweiten Richtung besteht, und der dritte Abstand (d3) dazu dient, zu verhindern, dass die zweite Befestigungskomponente (220) das Magnetfeld an der Position der Magnetfeld-Erkennungseinrichtung beeinflusst, wenn der Eingabestift (200) in der zweiten Ausrichtung durch Befestigung fixiert ist.

## Revendications

1. Système de détection d'accessoires, comprenant :
une tablette électronique (100), comprenant un premier composant de fixation (120), un dispositif de détection de champ magnétique (110) et une première structure de charge (143) ; le premier composant de fixation (120) comprenant un premier élément de fixation (121) et un deuxième élément de fixation (122) espacés dans une première direction ; le dispositif de détection de champ magnétique et la première structure de charge étant tous deux situés entre le premier élément de fixation (121) et le deuxième élément de fixation (122) et le dispositif de détection de champ magnétique étant conçu pour obtenir des informations d'intensité de champ magnétique ;
un stylet (200), comprenant un deuxième composant de fixation (220), un premier aimant (210), un deuxième aimant (230) et une deuxième structure de charge (243) ; le deuxième composant de fixation (220) comprenant un troisième élément de fixation (221) et un quatrième élément de fixation (222) espacés dans une deuxième direction ; le premier aimant (210) et le deuxième aimant (230) étant tous deux situés entre le troisième élément de fixation (221) et le quatrième élément de fixation, et la deuxième structure de charge (243) étant située entre le premier aimant (210) et le deuxième aimant (230) ;
le deuxième composant de fixation (220) pouvant être attaché au premier composant de fixation (120), de sorte que le stylet (200) puisse être fixé à la tablette électronique (100) par fixation selon une première orientation ou une seconde orientation ; et le premier aimant (210) étant opposé au dispositif de détection de champ magnétique lorsque le stylet (200) est fixé à la tablette électronique (100) par fixation dans la première orientation ; et le deuxième aimant (230) étant opposé au dispositif de détection de champ magnétique lorsque le stylet (200) est fixé à la tablette électronique (100) par fixation dans la seconde orientation ; et la première structure de charge étant opposée à la deuxième structure de charge (243) lorsque le stylet (200) est fixé à la tablette électronique (100) par fixation dans la première orientation ou la seconde orientation ;
la première orientation étant opposée à la seconde orientation, et le premier composant de fixation (120) ainsi que le deuxième composant de fixation (220) étant des réseaux de Halbach.

2. Système selon la revendication 1, dans lequel le dispositif de détection de champ magné tique est conçu pour fournir une première information d'indication lorsque l'information d'intensit é du champ magnétique est supérieure à un seuil prédéfini.

3. Système selon la revendication 2, dans lequel le dispositif de détection de champ magné tique est en outre conçu pour fournir une seconde information d'indication lorsque l'information d'intensité du champ magnétique est inférieure au seuil prédéfini.

4. Le système selon la revendication 2 ou 3, dans lequel le premier aimant (210) est conçu pour déclencher le dispositif de détection de champ magnétique afin de produire une première information d' indication lorsque le stylet (200) est fixé à la tablette (100) par attachement dans la première orientation, et le second aimant (230) est conçu pour déclencher le dispositif de dé tection de champ magnétique afin de produire la première information d' indication lorsque le stylet (200) est fixé à la tablette (100) par attachement dans la seconde orientation.

5. Le système selon l'une quelconque des revendications 1 à 4, dans lequel le dispositif de détection de champ magnétique et le premier élément de fixation (120) sont disposés côte à côte dans la première direction, et la première direction est perpendiculaire à la direction d'épaisseur de la tablette (100) ; et
le premier aimant (210), le second élément de fixation (220) et le second aimant (230) sont disposés côte à côte dans la seconde direction.

6. Le système selon l' une quelconque des revendications 1 à 5, dans lequel la première structure de chargement est disposée de manière symétrique par rapport à une ligne centrale (O6) du premier élément de fixation (120).
et la seconde structure de chargement (243) est disposée de manière symétrique par rapport à une ligne centrale (O5) du second élément de fixation (220).

7. Le système selon l'une quelconque des revendications 1 à 6, dans lequel le premier aimant (210) et le second aimant (230) sont disposés de manière symétrique par rapport à une ligne centrale (O5) du second élément de fixation (220) ; et
lorsque le stylet (200) est fixé à la tablette (100) par attachement dans la première orientation et que le premier élément de fixation (120) est exactement face au second élément de fixation (220), le premier aimant (210) est exactement face au dispositif de détection de champ magnétique.

8. Le système selon l'une quelconque des revendications 1 à 7, dans lequel le stylet (200) est fixé à la tablette (100) dans la première orientation lorsque le premier élément d'attache (121) est attaché au troisième élément d'attache et le second élément d'attache (122) est attaché au quatrième élément d'attache ; et le stylet (200) est fixé à la tablette (100) dans la seconde orientation lorsque le premier élément d'attache (121) est attaché au quatrième élément d'attache et le second élément d'attache (122) est attaché au troisième élément d'attache.

9. Le système selon l'une quelconque des revendications 1 à 8, dans lequel un espacement (h) par lequel le premier élément de fixation (120) est décalé par rapport au second élément de fixation (220) dans la seconde direction est inférieur à la moitié de la première structure de chargement dans la première direction et inférieur à la moitié de la seconde structure de chargement (243) dans la seconde direction lorsque le stylet (200) est fixé à la tablette (100) par attachement.

10. Le système selon l'une quelconque des revendications 1 à 9, dans lequel la tablette (100) est configurée pour déterminer que le stylet (200) est fixé en position par attache sur la base des premières informations d'indication.

11. Le système selon l'une quelconque des revendications 1 à 10, dans lequel la tablette (100) comprend un premier module de charge sans fil (140), le premier module de charge sans fil (140) comprend une première puce de charge (142) et la première structure de charge ; le stylet (200) comprend un second module de charge sans fil (240), le second module de charge sans fil (240) comprend une seconde puce de charge (242) et la seconde structure de charge (243) ; la première puce de charge (142) est configurée pour contrôler la première structure de charge afin de fournir un courant lorsque le stylet (200) est fixé en position par attache, et la seconde puce de charge est configurée pour recevoir le courant via la seconde structure de charge (243) afin de recharger le stylet (200) lorsque ce dernier est fixé en position par attache.

12. Le système selon la revendication 11, dans lequel la première puce de charge (142) est en outre configurée pour contrôler la première structure de charge afin d'émettre un signal de demande de connexion de communication après que la tablette (100) ait reçu la première information d'indication et avant que la tablette (100) ne détermine que le stylet (200) est fixé en position par attache, et le signal de demande de connexion de communication est utilisé pour permettre au stylet (200) d'émettre des informations d'appairage ;
la première puce de charge (142) est en outre configurée pour recevoir les informations d'appairage via la première structure de charge ; lorsque la première structure de charge reçoit les informations d'appairage et que celles-ci sont vérifiées avec succès, le stylet (200) est fixé en position par attache, et lorsque la première structure de charge ne reçoit pas les informations d'appairage, le stylet (200) n'est pas fixé en position par attache ; et
la seconde puce de charge est en outre configurée pour recevoir le signal de demande de connexion de communication via la seconde structure de charge (243), et contrôler la seconde structure de charge (243) afin d'émettre les informations d'appairage après réception du signal de demande de connexion de communication.

13. Le système selon la revendication 11 ou 12, dans lequel le premier module de charge sans fil (140) est en outre configuré pour passer à un état de fonctionnement lorsque la tablette (100) reçoit la première information d'indication ; et
le premier module de charge sans fil (140) est en outre configuré pour passer à un état de faible consommation d'énergie lorsque la tablette (100) ne reçoit pas la première information d'indication.

14. Système selon l'une quelconque des revendications 1 à 13, dans lequel un premier espacement (d1) existe entre le premier élément de fixation (120) et le dispositif de détection de champ magnétique dans la première direction ; et
le premier espacement (d1) est utilisé pour empêcher le premier élément de fixation (120) d'influencer le champ magnétique à la position du dispositif de détection de champ magnétique.

15. Système selon l'une quelconque des revendications 1 à 14, dans lequel un second espacement (d2) existe entre le premier aimant (210) et le second élément de fixation (220) dans la seconde direction, et le second espacement (d2) est utilisé pour empêcher le second élément de fixation (220) d'influencer le champ magnétique à la position du dispositif de détection de champ magnétique lorsque le stylet (200) est fixé par attachement dans la première orientation ; et
un troisième espacement (d3) existe entre le second aimant (230) et le second élément de fixation (220) dans la seconde direction, et le troisième espacement (d3) est utilisé pour empêcher le second élément de fixation (220) d'influencer le champ magnétique à la position du dispositif de détection de champ magnétique lorsque le stylet (200) est fixé par attachement dans la seconde orientation.
